# EUROPEAN PATENT APPLICATION

(11) **EP 4 618 067 A1**
(43) Date of publication of application: **17.09.2025**
(21) Application number: 22964772.2
(22) Date of filing: 09.11.2022
(51) Int. Cl.: G09G 3/32

(54) **LED DISPLAYING CONTROL METHOD, LED DISPLAY SCREEN, CONTROL SYSTEM THEREFOR, AND CORRESPONDING ASSEMBLY**

(71) Applicant: Xi'an Novastar Tech Co., Ltd., Xi'an, Shaanxi 710075 (CN)
(72) Inventor: CHU, Jianping, Shaanxi 710000 (CN); LIANG, Wei, Shaanxi 710000 (CN); WEI, Guifeng, Shaanxi 710000 (CN); YUAN, Shengchun, Shaanxi 710000 (CN)
(74) Representative: MERH-IP Matias Erny Reichl Hoffmann Patentanwälte PartG mbB
(86) International application number: PCT/CN2022/130950
(87) International publication number: WO 2024/098298

(57) **Abstract**

An LED display control method, an LED display screen and a control system (30) thereof, and corresponding components. The LED display screen and the control system (30) thereof include a module control device (31) and a display unit (32) connected to the module control device (31); the module control device (31) is configured to generate signals-to-be-transmitted, convert the signals-to-be-transmitted into a first serial signal through a parallel-to-serial converter module, and transmit the first serial signal to a plurality of display modules connected in series in the display unit (32); and a control module of each display module is configured to analyze the first serial signal to obtain an image-drive-signal-to-be-displayed of the display module, and control the display module to display the image-drive-signal-to-be-displayed according to a drive control signal. The cabling of the LED display screen and the control system (30) thereof may be simplified, and the signal stability of the LED display screen and the control system (30) thereof may be enhanced.

## Description

### TECHNICAL FIELD

The present application relates to the field of LED displaying technologies, and more particularly, to an LED display control method, an LED display screen and a control system thereof, and corresponding components, more particularly, the corresponding components include a module control device, a parallel-to-serial converter module, an LED display screen, a plurality of display modules and control modules.

### BACKGROUND

With the development of technologies of LED display screens, application scenarios of LED display screens are increased. In a control process of an LED display screen, a user usually needs to control displaying of the LED display screen through a control system of the LED display screen. In the related art, an LED display screen and a control system thereof may include a module control device and a display screen, where the module control device may generate and allocate an image-drive-signal-to-be-displayed, and perform unified control on a plurality of display modules of the LED display screen through multiple interactive interfaces and connecting wires such as flat cables. It is found in practical applications that, the number of display modules that may be carried by the module control device is limited according to this connection manner. The more the number of the display modules of the LED display screen, the more the number of flat cables that are required to be arranged to connect the interactive interfaces of the module control device with the display modules, and the more complex the cabling is. Reduction of signal stability of the LED display screen and the control system thereof is prone to occur due to the signal interference between the flat cables.

### SUMMARY

An objective of the embodiments of the present application is providing an LED display control method, an LED display screen and a control system thereof, and corresponding components. More specifically, the corresponding components include a module control device, a parallel-to-serial converter module, an LED display screen, a plurality of display modules and control modules. Problems of complex cabling and low stability in the existing LED display screen and the control system thereof may be solved.

In accordance with the first aspect, an LED display control method is provided, the LED display control method includes: generating signals-to-be-transmitted by a module control device, where the display unit includes a plurality of display modules connected in series, and the signals-to-be-transmitted include an image-drive-signal-to-be-displayed of each display module; converting, by the module control device, the signals-to-be-transmitted into a first serial signal and transmitting the first serial signal to the plurality of display modules connected in series in the display unit; separately analyzing, by a control module of each display module in the display unit, the first serial signal to obtain the image-drive-signal-to-be-displayed of the display module, and controlling the display module to display the image-drive-signal-to-be-displayed thereof according to a drive control signal.

In accordance with the second aspect, an LED display screen and a control system thereof is provided. The LED display screen and the control system thereof include a module control device and a display unit connected with the module control device, the display unit includes a plurality of display modules connected in series, and each display module is provided with a control module. The module control device is configured to generate signals-to-be-transmitted, convert the signals-to-be-transmitted into a first serial signal, and transmit the first serial signal to the plurality of display modules connected in series in the display unit. The signals-to-be-transmitted include an image-drive-signal-to-be-displayed of each display module in the display unit. A control module of the display module is configured to analyze the first serial signal to obtain an image-drive-signal-to-be-displayed of the display module, and control the display module to display the image-drive-signal-to-be-displayed of the display module according to a drive control signal.

In accordance with the third aspect, an LED display control method is provided. This method includes: receiving image frame signals, and generating signals-to-be-transmitted according to the image frame signals, where the display unit includes a plurality of display modules connected in series, the signals-to-be-transmitted include an image-drive-signal-to-be-displayed of each display module in the display unit and drive control signals respectively corresponding to each display module; converting the signals-to-be-transmitted into a first serial signal; and transmitting the first serial signal to the plurality of display modules connected in series in the display unit.

In accordance with the fourth aspect, a module control device is provided. The module control device is configured to control a display unit including a plurality of display modules connected in series, and the module control device includes a signal receiving module, a parallel-to-serial converter module, a transmission module, and a serial output interface connected to the display unit. The signal generation module is configured to receive image frame signals, and generate signals-to-be-transmitted according to the image frame signals, the signals-to-be-transmitted include an image-drive-signal-to-be-displayed of each display module in the display unit and drive control signals respectively corresponding to each display module. The parallel-to-serial converter module is configured to convert the signals-to-be-transmitted into a first serial signal. The transmission module is configured to transmit the first serial signal to the plurality of display modules connected in series in the display unit through the serial output interface.

In accordance with the fifth aspect, a parallel-to-serial converter module is provided. The parallel-to-serial converter module is arranged in a module control device, the module control device is connected to a display unit, and the display unit includes a plurality of display modules connected in series. The parallel-to-serial converter module is configured to convert parallel signals-to-be-transmitted generated by the module control device into a first serial signal. Where, the signals-to-be-transmitted include an image-drive-signal-to-be-displayed of each display module in the display unit and drive control signals respectively corresponding to each display module, and the first serial signal is a signal transmitted to the plurality of display modules connected in series in the display unit through the module control device.

In accordance with the sixth aspect, an LED display screen is provided. The LED display screen includes one or a plurality of display unit(s), each of at least some of the plurality of display units includes a plurality of display modules connected in series, and each display module is provided with a control module. The control module of the display module is configured to analyze the first serial signal sent by the module control device to obtain an image-drive-signal-to-be-displayed of each display module in the same display unit and drive control signals respectively corresponding to each display module in the same display unit, and control the display module to display the image-drive-signal-to-be-displayed of the display module according to the drive control signal corresponding to the display module.

In accordance with the seventh aspect, an LED display module is provided. The LED display module and other display modules are connected in series to form a display unit, the display unit is connected to a module control device, and the LED display module is provided with a control module. The control module of the display module is configured to analyze a first serial signal sent from the module control device to obtain an image-drive-signal-to-be-displayed of each display module in the same display unit and drive control signals respectively corresponding to each display module in the same display unit, and control the display module to display the image-drive-signal-to-be-displayed of the display module according to the drive control signal corresponding to the display module.

In accordance with the eighth aspect, a control module is provided. The control module is arranged in a display module, the display module and other display modules are connected in series to form a display unit, and the display unit is connected to a module control device. The control module is configured to analyze a first serial signal sent from the module control device to obtain an image-drive-signal-to-be-displayed of each display module in the same display unit, and control displaying of the image-drive-signal-to-be-displayed according to a drive control signal.

In accordance with the ninth aspect, a computer-readable storage medium is provided. The computer-readable storage medium stores a computer program, that, when executed by a processor, implements the functions of the control module or the parallel-to-serial converter module.

In accordance with the tenth aspect, a computer program product is provided. When the computer program product is executed by the module control device, the module control device is caused to implement the functions of the parallel-to-serial converter module. When the computer program product is executed by the module control device, the module control device is caused to implement the functions of the control module.

The LED display control method provided in this embodiment of the present application has the following beneficial effects: in the embodiments of the present application, the LED display screen and the control system thereof do not need to separately send the image-drive-signal-to-be-displayed of each of the display modules to the corresponding display module. Instead, the LED display screen and the control system thereof converts the parallel image-drive-signal-to-be-displayed into the first serial signal, and send the first serial signal to the plurality of display modules connected in series in the display unit, and the first serial signal is transmitted among the plurality of display modules connected in series in the display unit. In this way, each display module may analyze the first serial signal to obtain the image-drive-signal-to-be-displayed thereof after receiving the first serial signal, and display the image-drive-signal-to-be-displayed thereof according to the drive control signal. Therefore, the image-drive-signal-to-be-displayed of the plurality of display modules connected in series may be transmitted through one single interactive interface of the module control device, the number of interactive interfaces used for transmitting image drive signals in the LED display screen and the control system thereof is reduced, the number of connecting wires between the LED display screen and the control system thereof and the display modules is correspondingly reduced, and the cabling of the LED display screen and the control system thereof is simplified. In addition, the reduction of the number of the interactive interfaces may reduce the probability of abnormal transmission caused due to an abnormal interface, and the reduction of the number of the connecting wires between the module control device and the display modules may reduce the signal interference between the connecting wires. Therefore, the signal stability of the LED display screen and the control system thereof is enhanced.

### DESCRIPTION OF THE DRAWINGS

In order to describe the embodiments of the present application more clearly, a brief introduction regarding the accompanying drawings that need to be used for describing the embodiments or demonstrative technologies is given below. It is obvious that the accompanying drawings described below are merely some embodiments of the present application, a person of ordinary skill in the art may also obtain other drawings according to the current drawings without paying creative works.
FIG. 1 is a schematic structural diagram of an LED display screen and a control system thereof in the related art;
FIG. 2 is a schematic structural diagram of a module control device of HUB type in the related art;
FIG. 3 is a schematic structural diagram of an LED display screen and a control system thereof according to one embodiment of the present application;
FIG. 4 is a schematic structural diagram of an LED display screen according to one embodiment of the present application;
FIG. 5 is a schematic structural diagram of an LED display screen and a control system thereof which uses a converter chip for parallel-to-serial signal conversion according to one embodiment of the present application;
FIG. 6 is a first schematic diagram of a converter chip according to one embodiment of the present application;
FIG. 7 is a second schematic diagram of the converter chip according to one embodiment of the present application;
FIG. 8 is a second schematic structural diagram of the LED display screen and the control system thereof which uses a master chip to perform parallel-to-serial signal conversion according to one embodiment of the present application;
FIG. 9 is a schematic diagram of a control chip according to one embodiment of the present application;
FIG. 10 is a schematic flowchart of an LED display control method applied to the LED display screen and the control system thereof according to one embodiment of the present application;
FIG. 11 is a schematic structural diagram of a backup among interactive interfaces according to one embodiment of the present application;
FIG. 12 is a schematic structural diagram of a backup among module control devices according to an embodiment of the present application;
FIG. 13 is a schematic structural diagram of connecting one single module control device with a plurality of display units according to one embodiment of the present application;
FIG. 14 is a schematic structural diagram of connecting one single module control device with a plurality of display units through the converter chip and the plurality of interactive interfaces according to one embodiment of the present application;
FIG. 15 is a schematic structural diagram of connecting one single module control device with the plurality of display units through the master chip and the plurality of interactive interfaces according to one embodiment of the present application;
FIG. 16 is a schematic structural diagram of performing signal compression and decompression by using an encryption algorithm of the master chip and a decompression algorithm of the control chip according to one embodiment of the present application;
FIG. 17 is a schematic structural diagram of performing signal encryption and decompression by using a compression chip and a decompression chip according to an embodiment of the present application;
FIG. 18 is a schematic structural diagram of performing signal decompression by using a decompression chip of a display module according to one embodiment of the present application;
FIG. 19 is a schematic flowchart of an LED display control method applied to the module control device according to one embodiment of the present application;
FIG. 20 is a schematic diagram of arranging a GND signal pin between two pairs of TX signal pins according to one embodiment of the present application;
FIG. 21 is a schematic structural diagram of a parallel-to-serial converter module according to one embodiment of the present application;
FIG. 22 is a schematic structural diagram of an LED display screen provided with an accommodating device according to one embodiment of the present application;
FIG. 23 is a schematic structural diagram of a control module that uses a display driving signal interception unit according to an embodiment of the present application;
FIG. 24 is a schematic structural diagram of a control module using an image drive signal interception unit and a drive control signal generation unit according to one embodiment of the present application;
FIG. 25 is a schematic structural diagram of a control module that uses the image processing unit and the drive control signal generation unit according to one embodiment of the present application.

### DETAILED DESCRIPTION OF EMBODIMENTS

In order to make the objective, the technical solutions and the advantages of the present application be clearer and more understandable, the present application will be further described in detail below with reference to accompanying figures and embodiments. It should be understood that the embodiments described in detail herein are merely intended to explain the present application, rather than limiting the present application. Based on the embodiments in the present application, some other embodiments, which are obtained by the person of ordinary skill in the art without paying creative labor, are all included in the protection scope of the present application. It is worth noting that, when describing that one component is "fixed to" or "arranged on" another component, this component may be directly or indirectly arranged on another component. When describing that one component "is connected with" another component, this component may be directly or indirectly connected to the another component. Orientation or position relationships indicated by terms including "upper", "lower", "left" and "right" are based on the orientation or position relationships shown in the accompanying figures and is only used for the convenience of description, instead of indicating or implying that the indicated device or element must have a specific orientation and is constructed and operated in a particular orientation, and thus should not be interpreted as limitation to the present application. For the person of ordinary skill in the art, the specific meanings of the afore-mentioned terms may be interpreted according to specific conditions. Terms of "the first" and "the second" are only for the purpose of describing conveniently and should not be interpreted as indicating or implying relative importance or implicitly indicating the number of indicated technical features. "Multiple/a plurality of" means two or more unless there is an additional explicit and specific limitation.

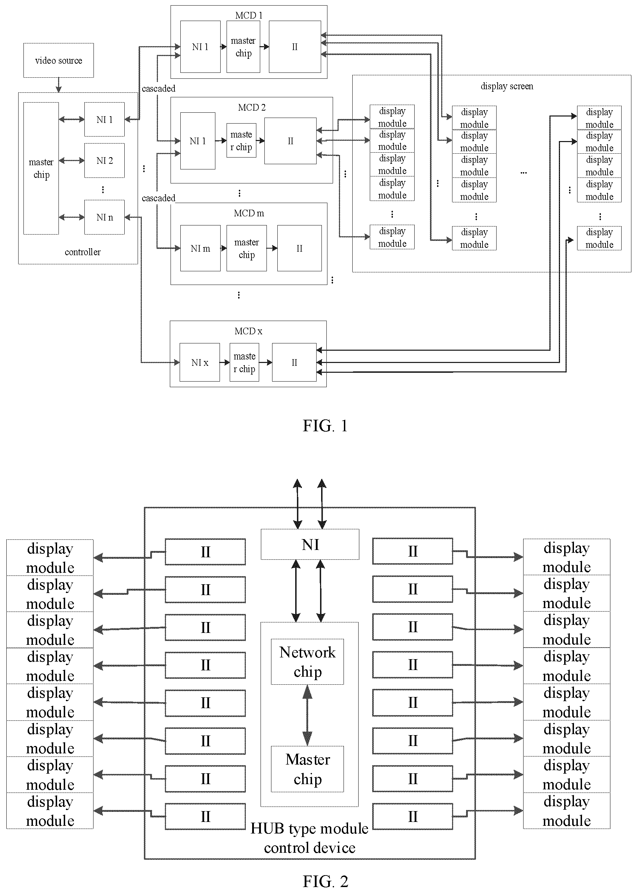

In related art, as shown in FIG. 1, an LED display screen and a control system thereof may include a controller, a module control device and a display screen. The display screen usually includes multiple boxes, and each box is formed encapsulating one or a plurality of display modules. A network transmission interface (or a network port) of the controller may be connected to one module control device or multiple cascaded module control devices so as to send image frame signals to the module control device(s) through the network port. After receiving the image frame signals, the module control device may generate an image drive signal according to the image frame signals to control the display module(s) in the box through an interactive interface.

Referring to FIG. 1 and FIG. 2, no matter the module control device of HUB type or the module control device of core tight joint plug-in type, the module control device will be connected to the display module through the interactive interface on a HUB board. A connection mode between the HUB board and the display module is usually star connection mode, that is, interactive interfaces on the HUB board are connected to one display module, respectively. Most of the interactive interfaces of the HUB board are HUB75 interface or HUB320 interface. After generating the image drive signal, the module control device may send the image-drive-signal-to-be-displayed of each display module to the corresponding display module through the HUB75 interface or the HUB320 interface. The 16 parallel signals transmitted by 16 interactive interfaces in parallel are referred to as an LED data group. The larger the area of the LED display screen, the more the number of display modules, the more the number of flat cables that need to be arranged by the module control device for connecting the interactive interfaces of the module control device and the display modules. Thus, complex cabling is caused, and reduction of the signal stability of the LED display screen and the control system thereof is prone to occur due to signal interference among these flat cables.

In view of this, the present application proposes an LED display screen and a control system thereof. In this LED display screen control system, the image drive signal that needs to be transmitted in parallel originally may be converted into a serial signal at the module control device, and a plurality of display modules are connected in series as a display unit. Thus, the serial signal is transmitted between the plurality of display modules connected in series in the display unit, then, one single interactive interface may load multiple display modules connected in series through one single connecting line. In other words, the image-drive-signal-to-be-displayed of each display module may be transmitted through one single interactive interface. The number of interactive interfaces required by the same number of display modules is reduced, and the number of connecting wires between the module control device and the display modules is reduced accordingly. Therefore, the cabling of the entire LED display and the control system thereof is simpler.

In addition, the reduction of interactive interfaces may reduce the probability of abnormal transmission problems caused by abnormal interfaces. The reduction of the connecting wires between the module control device and the display modules may reduce the signal interference between the connecting wires. Therefore, the signal stability of the display screen and the control system thereof is enhanced.

In addition, since the number of interactive interfaces needed by the LED display screen and the control system thereof is reduced, and the signals transmitted to the display units are serial signals, the module control device no longer needs to transmit parallel signals through the interactive interface on the HUB board. By configuring the serial output interface as the interactive interface on the module control device, the module control device may load (i.e., through the parallel loading approach of the HUB board) the same number of display modules as in the related art. The parallel signal contained in the same LED data set in related art will also be normalized to a serial signal, that is, the LED display screen and the control system thereof support a standardized display having a fixed number of display modules, such as 16 display modules, 24 display modules, etc.

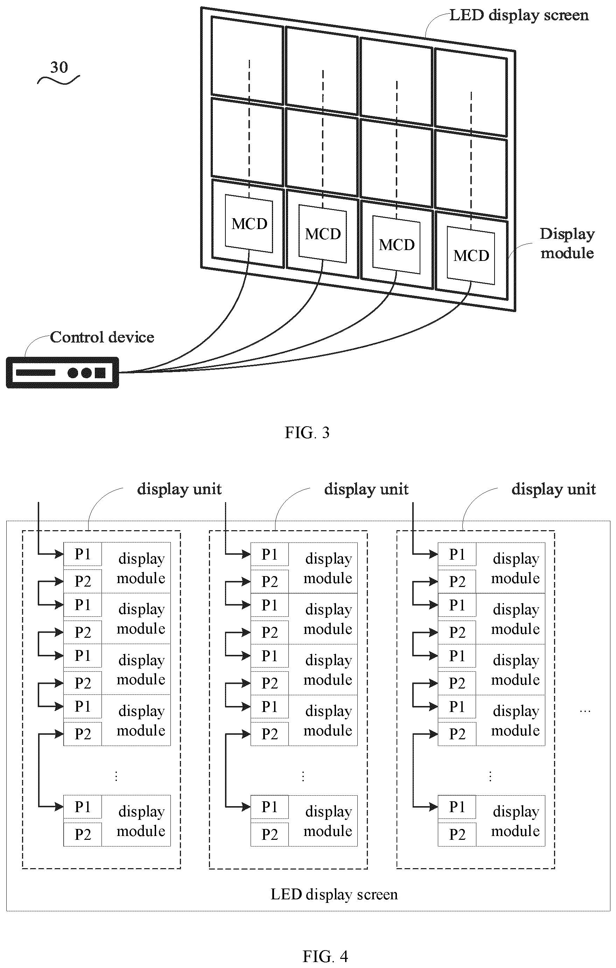

In order to illustrate the solutions provided by the embodiments of the present application, first, some terms mentioned in the present application are explained as follows:
Referring to FIG. 3, FIG. 3 illustrates the LED display screen and the control system thereof provided in the embodiments of the present application. The LED display screen and the control system thereof 30 may include an LED display screen, a module control device and a control device. The control device may include a controller and a master computer. In some embodiments, the controller and the master computer may be the same device.

The LED display screen and the control system thereof: the LED display screen and the control system thereof are used to control the LED display screen to realize LED display function. Specifically, the LED display screen and the control system thereof may control the LED display screen through the control device, module control device and more or less components, so that the LED display screen is enabled to display pictures, such as specific words, images and videos.

Controller: the controller is a control device used to transmit a source signal to the module control device, which may refer to a transmission card or a device provided with the transmission card. The controller may be provided with one or a plurality of network ports, and may transmit the image frame signals to the connected module control device through the network port(s) after obtaining the image frame signals. In some embodiments, the controller may obtain the image frame signals from a video source (or an external source) connected with the controller, the video source may transmit the image frame signals to the controller through a connection cable, such as HDMI (High Definition Multimedia Interface), DVI (Digital Visual Interface), or DP (DisplayPort) cable. In other embodiments, the controller may also obtain image frame signals from an internal memory (also referred to an internal source) of the controller.

Module control device: the module control device is used to control the display modules in the LED display screen. The module control device may refer to a scanner card, a receiving card or a device provided with the scanner card or the receiving card. In some embodiments, the module control device may also refer to a chip, for example, the module control device may be a T-con chip, etc. The module control device may send the image drive signal to the display module to enable the display module to display a corresponding image. The module control device may interact with the display module through an interactive interface, the interactive interface may be a network interface, a TYPC-C interface, a SATA (Serial Advanced Technology Attachment) interface or other interface. The interactive interface and the display module may be connected based on the specified connecting line, which may be network cable, type-C cable, SATA cable or other connecting wires.

Master computer: the master computer is a control device that supports user interaction, which may be, such as a mobile phone, a computer, a smart watch, etc. The user may configure some important parameters of the LED display screen and various components in the LED display control system through the master computer. For example, the master computer may configure an image resolution of the LED display screen, a used driving control signal, an applied display mode, etc. It should be noted that the afore-mentioned user interaction functions may be realized through software of the master computer, and when the master computer and the controller are the same device, the software used for realizing the afore-mentioned functions may be integrated in the controller.

LED display screen: the LED display screen is composed of several LED display modules, and may be used to display various information such as texts, images and videos. In this embodiment of the present application, the LED display screen may be an ordinary LED display screen, or a microLED, a miniLED and a new type of LED display screen in the future, the type of the LED display screen is not limited in the present application.

LED display module (also be abbreviated as display module): an LED display module is also referred to as a lamp board. Each LED display module may include LED lamp beads (also be referred to as pixel lamp), a PCB board, a driver chip (driver IC) and a decoder chip (Decoder IC). The driving IC and decoding IC may process the image drive signal according to the drive control signal, control the lamp panel to turn on or stop displaying, thereby realizing a display function. Generally, each pixel on the LED display screen may include one or multiple LED beads, for example, the pixel may include three LED beads of red, green and blue, four LED beads of red, green, green and blue; alternatively, the pixel may include more or less LED beads. The so-called "controlling the lamp panel to light up or stop displaying" essentially means that the LED beads on the control lamp panel are turned on or turned off, so that each pixel presents the corresponding color.

Display unit: in the LED display screen, several LED display modules may be connected in series in a wired or wireless manner. Multiple display modules connected in series may be referred to as a display unit. Taking the LED display screen shown in FIG. 4 as an example, each dotted box in FIG. 4 may represent a display unit. One single display unit may be connected with one single interactive interface of the module control device, such that the signal sent by the module control device through the interactive interface may be transmitted between the plurality of display modules connected in series. For example, assuming that the display unit includes: a first cascaded display module connected with the interactive interface, a second cascaded display module connected with the first cascaded display module, a third cascaded display module connected with the second cascaded display module, ... , and a N-th cascaded display module connected with a (N-1)-th cascaded display module, where n is a positive integer greater than or equal to 2. The module control device may transmit the signal to the first cascaded display module through the interactive interface, such that the signal is transmitted from the first cascaded display module to the second cascaded display module, and then is transmitted from the second cascaded display module to the third cascaded display module, and so on, until the signal is transmitted to the N-th cascaded display module.

It should be noted that, in the embodiments of the present application, the plurality of display modules may be encapsulated independently, or alternatively, the plurality of display modules are encapsulated into a box for operation. Each box may contain one or a plurality of display units, or contain some of the plurality of display modules in the same display unit, which is not limited in the present application.

In combination with the afore-mentioned terms, the technical solutions of the present application will be described with reference to the specific embodiments.

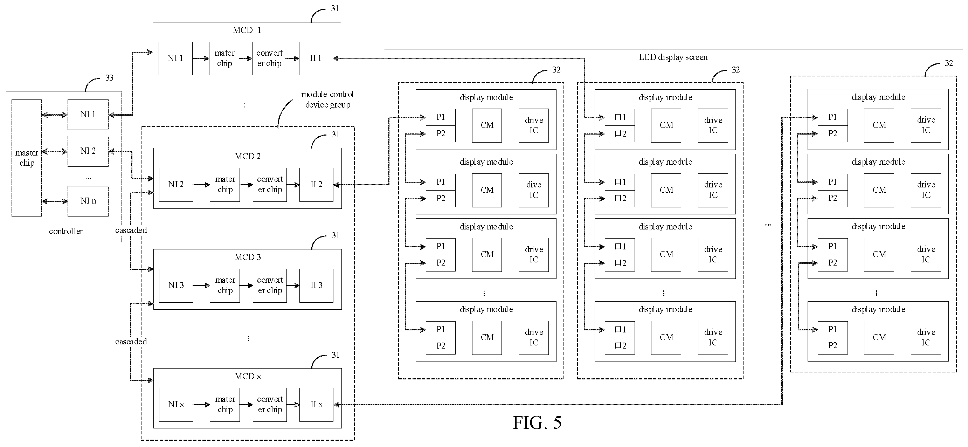

FIG. 5 illustrates a structural diagram of an LED display screen and a control system thereof 30 provided in the embodiments of the present application. Referring to FIG. 5, the LED display screen and the control system thereof 30 may include a module control device 31 and a display unit 32.

In this embodiment of the present application, the module control device 31 may be used to generate signals-to-be-transmitted, convert the signals-to-be-transmitted into a first serial signal, and transmit the first serial signal to a plurality of display modules connected in series in the display unit 32.

The signals-to-be-transmitted refer to the signals that need to be transmitted to the display module, and may specifically include the image-drive-signal-to-be-displayed of each display module in the display unit 32.

In some embodiments, the LED display screen and the control system thereof 30 may also include a controller 33. After obtaining the image frame signals to be displayed by the plurality of display modules, the controller 33 may send the image frame signals to be displayed by the plurality of display modules to the connected module control device 31 through the network transmission interface. By obtaining the image frame signals to be displayed by the plurality of display modules sent by the controller 33, the module control device 31 may generate image drive signals according to the image frame signals, and convert the image drive signals as the signals-to-be-transmitted into the first serial signal, and thereby transmitting the first serial signal to the plurality of display modules connected in series in the display unit 32.

The image frame signals may include configuration information of a single frame image, such as black screen parameters, actual parameters, starting position information, etc. After receiving the image frame signals, the module control device 31 may perform signal processing in combination with row signal to generate the image drive signal. The image drive signal may refer to the signal used to realize video playback and image playback, and may include R, G and B signals. Specifically, the image drive signal may include multiple groups of signals, each group of signals is a signal sent through a group of image drive signal pins of the module control device 31, and this group of image drive signal pins may include R, G, and B pins. The image drive signal required by each display module may be one or more groups of signals. The number of groups of signals contained in the image drive signal is related to the number of display modules carried by the module control device 31 and the number of groups of image drive signal pins contained in the module control device 31. Assuming that each display module requires two groups of signals, and the module control device 31 is provided with 32 groups of image drive signal pins, the module control device 31 may load 16 display modules. If the module control device 31 actually carries 10 display modules, the actual number of groups of the image drive signals is 20. As an example, when transmitting the first serial signal, the image drive signal may include 64 groups of signals, 128 groups of signals, and the like.

Compared with related art, in order to avoid the problems of too many interactive interfaces and too many cables due to transmission of parallel signals, the module control device 31 may convert the signals-to-be-transmitted into a first serial signal before signal transmission. In brief, the module control device 31 may compress a plurality of parallel signals (i.e., the image drive signals to be displayed by N display modules) into a serial high-speed signal. A transmission rate of the plurality of parallel signals is low. After compressing the plurality of parallel signals into the serial high-speed signal, the transmission rate is higher, which means that one signal transmitted in unit time may contain the information of N parallel signals transmitted in the unit time.

Since the signal transmitted to the display unit 32 is a serial signal, the module control device 31 no longer needs to use the interactive interface for transmitting parallel signals on the HUB board. By arranging a serial output interface as the interactive interface on the module control device 31, the module control device 31 may load multiple display modules that need to be carried based on the HUB board in related art. The "LED data group" in the related art may also be normalized to a first serial signal which may be transmitted step by step in the plurality of display modules connected in series in the display unit 32. Thus, each display module may receive the first serial signal.

It should be understood that the first serial signal received by a control module of each display module may be the same or different according to the requirement of signal transmission and signal analysis. For example, after receiving the first serial signal sent by an upper cascaded display module, a control module of each display module may directly forward the first serial signal to the control module of the cascaded display module. In this case, the first serial signal received by the control modules of the plurality of display modules may be identical. For another example, the control module of each cascaded display module may process the first serial signal after receiving the first serial signal sent by the upper cascaded display module, and then forward the first serial signal to the control module of the cascaded display module. The processing described here includes, but is not limited to, updating and sorting the information carried in the first serial signal. In this case, the first serial signal received by the control module of each display module may be different.

Each display module in the display unit 32 may be provided with a control module. The control module of each display module may analyze the image-drive-signal-to-be-displayed of the display module from the first serial signal and control each display module to display the image-drive-signal-to-be-displayed thereof according to the drive control signal. Specifically, the driving IC and the decoding IC of each display module may process the image drive signal thereof according to the drive control signal thereof, control the lamp panel to light up or stop displaying, thereby realizing the display function. The drive control signal is the signal used to control the drive IC and the decoding IC on the lamp board, and may specifically include OE (Output Enable)/Gclk (global clock/gray scale clock) signal, DCLK (tracking clock/data clock) signal, latch (LAT, latch) signal, refresh rate signal, and scan control signal (or referred to as decoding signal).

In some embodiments, the image drive signal and the drive control signal may be collectively referred to as the LED display drive signal.

In the embodiments of the present application, the LED display screen and the control system thereof 30 do not need to send the image-drive-signal-to-be-displayed of each display module separately to the corresponding display module. Instead, the LED display screen and the control system thereof 30 converts the parallel image-drive-signal-to-be-displayed into the first serial signal, and send the first serial signal to the plurality of display modules connected in series in the display unit 32. The first serial signal is transmitted between the plurality of display modules connected in series in the display unit 32, such that each display module may obtain the image-drive-signal-to-be-displayed thereof by analysis after receiving the first serial signal, and display the image-drive-signal-to-be-displayed thereof according to the drive control signal. Thus, the image drive signals to be displayed by the plurality of display modules connected in series may be transmitted through one single interactive interface of the module control device 31. The number of interactive interfaces used for transmitting the image drive signals in the LED display screen and the control system thereof 30 is reduced, and the number of connecting wires between the module control device 31 in the LED display screen and the control system thereof 30 and the display modules is correspondingly reduced. The cabling of the LED display screen and the control system thereof 30 is simplified. In addition, the reduction of the interactive interfaces may reduce the probability of an abnormal transmission problem caused by an abnormal interface. The reduction of the connecting wires between the module control device 31 and the display modules may reduce the signal interference between the connecting wires. Therefore, the signal stability of the LED display screen and the control system thereof 30 is enhanced.

A signal processing process in the LED display screen and the control system thereof 30 is described in detail below.

In some embodiments of the present application, the module control device 31 may be specifically used to use an internal parallel-to-serial converter module to convert the signals-to-be-transmitted transmitted through the parallel input interface into the first serial signal output by the serial output interface. For example, the afore-mentioned parallel input interface may be a transmission interface for transmitting single ended digital signals. The transmission interface for transmitting single ended digital signals may be a multi-channel interface for transmitting LVDS (Low-Voltage Differential Signaling) communication technology signals, alternatively, the transmission interface may be an interface for transmitting TTL (Transistor-Transistor logic) communication technology signals. The serial output interface may be a high-speed transmission interface, which may be an interface for transmitting Serdes serial communication technology signals. In other words, the module control device 31 may convert low-speed signals such as multi-channel LVDS signals and TTL signals into high-speed Serdes signals. It should be understood that the present application is not limited to this, but may also be other types of signals.

Specifically, referring to FIG. 5. In some embodiments, the parallel-to-serial converter module of the module control device 31 may be the master chip and the converter chip. The master chip may generate the signals-to-be-transmitted and transmit the signals to the converter chip. The converter chip converts the signals-to-be-transmitted generated by the master chip into the first serial signal, and transmits the first serial signal to the display unit 32 through the interactive interface. It should be understood that this interactive interface is the serial output interface.

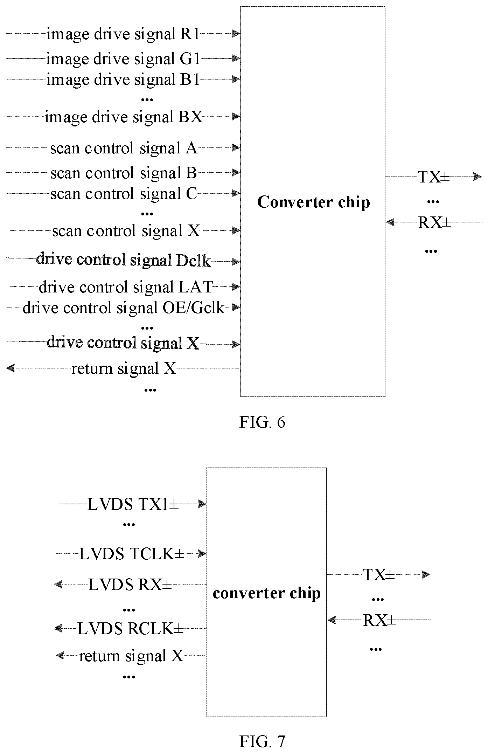

FIG. 6 and FIG. 7 illustrates two schematic diagrams of the converter chip, respectively.

Figure 6 illustrates a block diagram of pins of the converter chip for converting the TTL signal to Serdes signal. The converter chip may include pins on both sides. Pins on one side may include: one or more groups of image drive signal pins (R1 to RX, G1 to GX, and B1 to BX), one or more scan control signal pins (A to X), one or more drive control signal pins (Dclk, LAT, OE/Gclk, etc.), and return signal pins (X). Pins on the other side may include: one or more pairs of TX pins, one or more pairs of RX pins. Where, the "pair of pins" refers to a positive pin and a negative pin. For example, a pair of TX pins may include a TX+ pin and a TX- pin. A group of image drive signal pins may include an image drive signal pin R, an image drive signal pin G, and an image drive signal pin B. In other embodiments, the converter chip may also include SPI interface pin, serial port pin, clock input signal pin, reset signal pin, power signal pin, etc. It should be understood that the pins on each side may be used as pins on the input side and/or pins on the output side. In some embodiments, the pins on both sides correspond to the pins on the input side and the pins on the output side, respectively. According to the different signal transmission directions, the pins on the same side may be used as the pins on the input side and used as the pins on the output side. In other embodiments, the pin on the same side is both the pin on the input side and the pin on the output side. That is, signal is input from the pin on the same side and is output from the pin on the same side.

FIG. 7 illustrates a block diagram of pins of the converter chip for converting multi-channel LVDS signals into Serdes signals. The converter chip may include pins on both sides. Pins on one side may include one or more pairs of LVDS TX pins, one pair of LVDS TCLK pins, and return signal pins (X). Pins on the other side may include one or more pairs of TX pins. In some embodiments, the pins of the converter chip may also include one or more pairs of LVDS RX pins, a pair of LVDS RCLK pins, and/or one or more pairs of RX pins. Similarly, the converter chip may also include a SPI interface pin, a serial port pin, a clock input signal pin, a reset signal pin, a power signal pin, etc. The pins on each side may be used as pins on the input side and/or the pins on the output side. In some embodiments, the pins on both sides correspond to the pins on the input side and the pins on the output side respectively. According to the different signal transmission directions, the pins on the same side may be used as both the pins on the input side and the pins on the output side. In other embodiments, the pin on the same side is both the pin on the input side and the pin on the output side. That is, signal is input from the pin on the same side and is output from the pin on the same side.

It may be seen from FIG. 6 and FIG. 7 that in some embodiments, the number of pins of the serial output interface may be less than the number of pins of the parallel input interface. This method may reduce the number of signal pins and the number of interactive interfaces when transmitting the same data. In other words, in this way, the module control device 31 having fewer interactive interfaces may be selected, or said module control device 31 may be used to load more display modules.

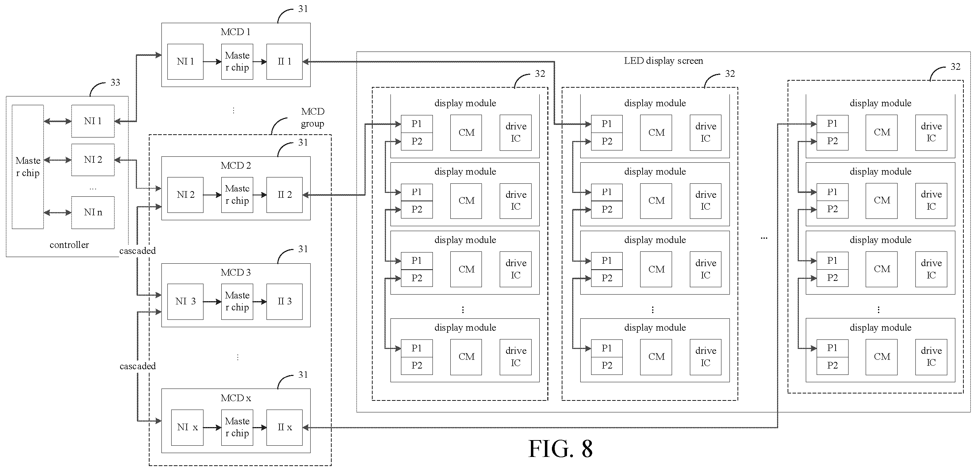

In other embodiments, as shown in Fig. 8, if the master chip may convert the signals-to-be-transmitted into the first serial signal through integrated IP or internal circuit, for example, when the master chip (e.g., FPGA) may directly output high-speed serial signal, the converter chip may also be omitted, and the master chip may realize the afore-mentioned conversion function. That is, the master chip may generate the signals-to-be-transmitted and convert the signals-to-be-transmitted into the first serial signal, and transmit the first serial signal to the plurality of display modules connected in series in the display unit 32 through the interactive interface.

In order to be adaptive to the first serial signal, in some embodiments, each display module in the display unit 32 may be provided with a control module, and the control module of the display module may be used to convert the received first serial signal into the first parallel signal and intercept a sub parallel signal from the first parallel signal. The first parallel signal may include an image-drive-signal-to-be-displayed of each of the plurality of display modules connected in series in the display unit 32, and the sub parallel signal may include an image-drive-signal-to-be-displayed of the display module. In other words, the control module of the display module may intercept an image-drive-signal-to-be-displayed thereof from the image-drive-signal-to-be-displayed of each display module. It should be understood that different display modules intercept different sub parallel signals.

For example, the control module of the display module may convert the first serial signal transmitted through the serial input interface into the first parallel signal transmitted through the parallel output interface. The serial input interface may be a high-speed transmission interface, that is, an interface for transmitting Serdes serial communication technology signals. The parallel output interface may be a transmission interface for transmitting single ended digital signals, that is, an interface for transmitting TTL communication technology signals, or a multi-channel interface for transmitting LVDS communication technology signals. In other words, the control module may convert the high-speed Serdes signals into low-speed signals such as multi-channel TTL signal and LVDS signal. It should be understood that the present application is not limited thereto, the low speed signals may also be other types of signals.

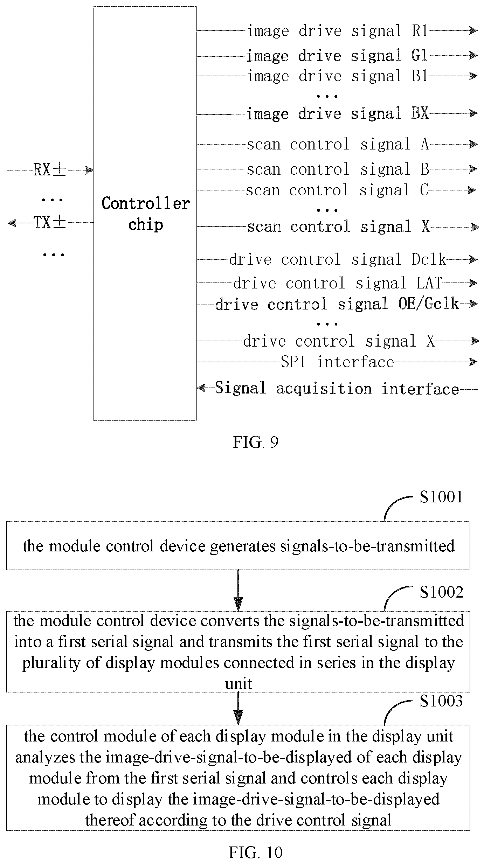

Specifically, the afore-mentioned control module may be a control chip. FIG. 9 illustrates a block diagram of pins of the control chip that converts the Serdes signals into single ended digital signals, such as TTL signals. The control chip may include two sides of pins, and pins on one side may include one or more pairs of RX pins, one or more pairs of TX pins. Pins on the other side may include one or more groups of image drive signal pins (R1 to RX, G1 to GX, and B1 to BX), one or more scan control signal pins (a to x), one or more drive control signal pins (DCLK, LAT, OE/Gclk, etc.), SPI interface pins, and signal acquisition interface pins. Similarly, the control chip may also include a serial port pin, a clock input signal pin, a reset signal pin, a power signal pin, etc. Pins on each side may be used as an input side pin and/or an output side pin. In some embodiments, the pins on both sides correspond to the pins on the input side and the pins on the output side respectively. According to the different signal transmission directions, the pins on the same side may be used as the pins on the input side and the pins on the output side. In other embodiments, the pin on the same side is both the pin on the input side and the pin on the output side. That is, signal is input from the pin on the same side and is output from the pin on the same side.

In the embodiments of the present application, the approach of intercepting image-drive-signal-to-be-displayed of the display module by the control module from the image-drive-signal-to-be-displayed of each display module may be selected according to the actual situation, which is not limited in the presented application.

As an example, the first serial signal may load the image-drive-signal-to-be-displayed of each display module and the corresponding data ID, the control module may match the data ID with the reference ID thereof and intercept the image drive signal corresponding to the successfully matched data ID.

In some embodiments, the image-drive-signal-to-be-displayed of each display module in the first serial signal may be sorted according to the order in which the plurality of display modules are connected in series, and data identification for representing the order is given in order. After the control module of the display module converts the first serial signal into the first parallel signal, the control module may match the data identification with the identification thereof so as to select an image drive signal in the corresponding order.

The method for obtaining the display module's own identification may be adjusted according to the actual situation. In some embodiments, the identification may be the identification of the display module itself. In some other embodiments, the first serial signal may load sorting information. The module control device may transmit the first serial signal to the first cascaded display module in the display unit. The control module of each display module in the display unit 32 updates the sorting information carried in the received first serial signal, and forwards the first serial signal with the updated sorting information to the cascaded display module. For example, the sorting information carried by the first serial signal sent by the module control device 31 is 0, and the first cascaded display module may update the sorting information to 1. Accordingly, the first cascaded display module may use the updated sorting information as its own identification and intercept the image drive signal corresponding to "1". Meanwhile, the first cascaded display module may forward the first serial signal with the sorting information of 1 to the second cascaded display module. The second cascaded display module can update the sorting information to 2. Accordingly, the second cascaded display module may use the updated sorting information as its own identification to intercept the image drive signal corresponding to "2". At the same time, the second cascaded display module may forward the first serial signal with the sorting information of 2 to the third cascaded display module, and so on. In other embodiments, the above identification may also be obtained by each display module in the display unit 32 by reporting number through the pins of the control module, the circuit and other physical hardware structures of the control module, and take the order of the number as its own identification, so as to intercept and use the data corresponding to its own identification information in the first serial signal. The obtaining of the identification is not limited in the present application.

In other embodiments, the module control device 31 may assign corresponding data ID of the display module to the image-drive-signal-to-be-displayed of each display module according to a configuration table such as screen configuration information. The control module of the display module may obtain the configuration information, query the correspondence relationship between the control module and the data ID from the configuration information, so as to intercept the image drive signal thereof. For example only, the present application is not limited thereto.

The configuration information may be configured by the user's software on the master computer. The user configures the configuration information in the software on the master computer, which is also referred to as screen configuration operation. Specifically, after completing the cabling of the display module in the LED display screen, the configuration information of the display screen such as the position of each display module and the size of each display module (i.e., the number of controlled LED pixels) needs to be notified to the controller 33, such that the controller 33 may allocate image frame data to the corresponding module control device 31. Therefore, in some embodiments, the controller 33 may accurately allocate the image frame data to the corresponding module control device 31 through the screen configuration operation, and enable each display module to obtain the configuration information. The correspondence relationship between the display module and the data ID is obtained, and the image drive signal of the display module is intercepted.

Furthermore, in the process of transmitting the first serial signal step by step by the display module, all cascaded display modules may also forward the first serial signal from which the corresponding image drive signal is removed to the cascaded display module. Specifically, the control module of the display module may convert the first serial signal into the first parallel signal, and convert other sub parallel signals other than its own sub parallel signal back into the serial signal, and forward it to the cascaded display module. For example, the first cascaded display module may convert the sub parallel signal from the second cascaded display module to the N-th cascaded display module into a new serial signal and forward it to the second cascaded display module. The second cascaded display module may convert the sub parallel signal from the third cascaded display module to the N-th cascaded display module into a new serial signal and forward it to the third cascaded display module, and so on. This implementation manner may reduce the information amount of the serial signal transmitted between the display modules, and further improve the transmission stability.

As another example, the image drive signals to be displayed by the plurality of display modules connected in series may correspond to an picture image. Accordingly, each control module may intercept its own image-area-to-be-displayed from the picture image according to a coordinate range corresponding to its own image-area-to-be-displayed in the picture image, and thereby obtaining its own image-drive-signal-to-be-displayed.

Specifically, the display module may obtain lamp board parameters (e.g., chip type, resolution, scanning mode, number of groups of data, data direction, etc.) of the master computer set by the user, and determine the coordinate range corresponding to the image-area-to-be-displayed based on the lamp board parameters.

In order to be adaptive to the first serial signal, in other embodiments, the control module of the display module may also be used to intercept the sub serial signal corresponding to the display module from the first serial signal, and convert the sub serial signal into sub parallel signal. The sub parallel signal includes the image-drive-signal-to-be-displayed of the display module itself. In other words, the control module of the display module first analyzes its own part of the first serial signal (sub serial signal), and then converts its own serial signal into a parallel signal, so as to obtain its own image-drive-signal-to-be-displayed, image drive signal.

As an example, the first serial signal may load each sub serial signal and the corresponding data ID. The control module may match the data ID with its own reference ID and select the sub serial signal corresponding to the successfully matched data ID.

As another example, the data length of each sub serial signal may be identical, and the control module may select the sub serial signal corresponding to the data byte according to the data length and the cascaded the display module. For example, assuming that the data length is a, when the display module is the N-th cascaded display module, the sub serial signal may be the part of the first serial signal having the data bytes range from (N-1)×a+1 to N×a. Specifically, assuming that the data length of the sub serial signal of each display module is 8 bytes, the first display module may intercept the part of the first byte to the eighth byte in the first serial signal to obtain the sub serial signal thereof, the second display module may intercept the part of the nineth byte to the sixteenth byte in the first serial signal to obtain the sub serial signal thereof, and so on.

In some other embodiments, the display module may also transmit signals other than the sub serial signal corresponding to the display module itself in the received first serial signal to the cascaded display module. That is, when each cascaded display module transmits the serial signal to the cascaded display module, this display module may eliminate its own sub serial signal from the serial signal transmitted to the cascaded display module. For example, the first cascaded display module may send the sub serial signals from the second cascaded display module to the N-th cascaded display module to the second cascaded display module, the second cascaded display module may send the sub serial signals from the third cascaded display module to the N-th cascaded display module to the fourth cascaded display module, and so on. This implementation manner may reduce the information amount of the serial signal transmitted between the display modules, and further improve the transmission stability.

In combination with the descriptions, FIG. 10 illustrates an LED display control method provided in the present application, this method may be applied to the LED display screen and the control system thereof 30.

In a step of S1001, the module control device generates signals-to-be-transmitted. The signals-to-be-transmitted may include an image-drive-signal-to-be-displayed of each display module in the display unit, and the display unit may include a plurality of display modules connected in series.

In a step of S1002, the module control device converts the signals-to-be-transmitted into a first serial signal and transmits the first serial signal to the plurality of display modules connected in series in the display unit.

In a step of S1003, the control module of each display module in the display unit analyzes the image-drive-signal-to-be-displayed of each display module from the first serial signal and controls each display module to display the image-drive-signal-to-be-displayed thereof according to the drive control signal.

In this embodiment of the present application, the LED display screen and the control system thereof 30 do not need to send the image-drive-signal-to-be-displayed of each display module separately to the corresponding display module. Instead, the LED display screen and the control system thereof 30 converts the parallel image-drive-signal-to-be-displayed into the first serial signal, and send the first serial signal to the plurality of display modules connected in series in the display unit 32. The first serial signal is transmitted between the plurality of display modules connected in series in the display unit 32, such that each display module may obtain the image-drive-signal-to-be-displayed thereof through analysis after receiving the first serial signal, and display the image-drive-signal-to-be-displayed thereof according to the drive control signal. Therefore, image-drive-signals-to-be-displayed of the plurality of display modules connected in series may be transmitted through one single interactive interface of the module control device 31, and the number of interactive interfaces used for transmitting the image drive signals in the LED display screen and the control system thereof 30 is reduced. For example, the afore-mentioned 16 HUB75 interfaces for connecting 16 display modules may be converted into one interactive interface for connecting 16 display modules connected in series, the number of connecting wires between the module control device 31 and the display modules in the LED display screen and the control system thereof 30 is reduced accordingly, and the cabling of the LED display screen and the control system thereof 30 is simplified.

In addition, the reduction of the interactive interface may reduce the probability of abnormal transmission problem caused by abnormal interface. The reduction of the connecting wires between the module control device 31 and the display modules may weaken the signal interference between the connecting wires. Therefore, the signal stability of the LED display screen and the control system thereof 30 is enhanced.

In addition, since the number of interactive interfaces required by the LED display screen and the control system thereof 30 is reduced, and the signal transmitted to the display unit 32 is the serial signal, the module control device 31 no longer needs to transmit parallel signals through the interactive interfaces on the HUB board. By configuring the serial output interface as the interactive interface on the module control device 31, the same number of display modules may be carried (i.e., through the parallel loading approach of the HUB board) as in the related art. The parallel signal contained in the same LED data set in related art will also be normalized to a serial signal, that is, the LED display screen and the control system thereof 30 support a standardized display with a fixed number of display modules, such as 16 display modules, 24 display modules, etc.

In some other embodiments, the module control device 31 may also receive image frame signals and generate multi-channel parallel signals. Each parallel signal includes the image frame signals of the plurality of display modules in the display unit 32 connected to one single module control device 31. The module control device 31 transmits each parallel signal to the corresponding display unit 32. The control module of each display module in the display unit 32 may obtain an image frame signal of the display module from the parallel signals and generate the image drive signal of the display module according to the image frame signal of the display module. For example, the module control device 31 may receive multi-channel LVDS signals (image frame signals), convert them into TTL signals (multi-channel parallel signals), and send the parallel signals to the corresponding display unit 32.

In order to further improve the signal stability and cost performance of the LED display screen and the control system thereof 30, a variety of different display functions are provided in the present application on the basis of the LED display screen and the control system thereof 30 shown in FIG. 5 or FIG. 8, and the LED display control method shown in FIG. 10, which are described below with reference to the specific embodiments.

### First embodiment:

In some embodiments of the present application, the control module of the display module may also obtain the module information thereof and transmit the module signal to the module control device 31 in the form of a second serial signal. Specifically, the second serial signal may be transmitted between the plurality of display modules connected in series in the display unit 32, and finally transmitted to the module control device 31 connected to the display unit 32.

The module signal refers to the information generated by the display module.

Specifically, the afore-mentioned control module may reserve interfaces such as a SPI interface, a serial interface Uart, an external antenna interface TX. The reserved interfaces may be connected with lamp board flash, MCU (Micro Controller Unit) and/or CPLD (Complex Programmable Logic Device) so as to read module information such as lamp board flash and spot check from the lamp board, and the display module sends the module information to the connected module control device 31. The module control device 31 connected to the display unit 32 may receive the second serial signal, analyze the second serial signal, and obtain the module signal of the display module, which is provided for the user to view the module status, etc. The reserved interfaces may be either serial transmission interfaces or parallel transmission interfaces, that is, the module information obtained by the control module may be either a serial signal or a parallel signal. If the module information is a serial signal, the control module may directly transmit the serial signal as a second serial signal to the module control device 31. If the module information is a parallel signal, the control module may also convert the parallel signal into a second serial signal, and then transmit the second serial signal to the module control device 31.

In some embodiments, the module information may be the flash information of the lamp board, the flash information of the lamp board may include the correction information of the LED beads in the display module, and the module control device 31 may correct the display screen based on the correction information. The correction information includes, but is not limited to, correction parameters currently used by the display module, the correction parameters may be the cold screen correction coefficient, thermal compensation coefficient, etc. The cold screen correction coefficient may be used to correct the display data as the target data when the display module is in the cold screen state, and the thermal compensation coefficient may be used to perform conversion between the cold screen data and hot screen data of the display module. Based on the above correction information, the module control device 31 may correct the display module in different ways, such as cold screen correction, thermal correction and gray scale correction. Thus, the display effect of each display module in the LED display screen is more uniform. In some embodiments of the present application, the flash information of the lamp board may be the serial transmission signal obtained by the display module through the SPI interface, and the display module may directly transmit the flash information. The SPI interface may include signals of pins of SSEL, SCLK, MISO, MOSI.

In other embodiments, the module signal may load the module status information of the display module. Specifically, the module status information may include status information of the display module, circuit information of the display module, voltage information, temperature information, etc.

In other embodiments, the module signal may also load the spot check information of the LED light spot in the display module. Specifically, the spot check information may include a detection result regarding whether the LED beads may be operated normally. A driver IC of the display module may detect the state of the LED beads and generate the detection result. The module control device 31 may return the module information to the controller 33 or the master computer, such that the controller 33 or the master computer can evaluate the bad points of the LED beads according to the spot check information.

In some other embodiments, the module signal may also contain information of the display module itself, such as module serial number (serial number, S/N), batch number, name of the material and other information.

In some embodiments of the application, the module status information and spot check information may be the parallel signal obtained by the display module from the driver IC, and the display module may convert the parallel signal into a second serial signal, and then transmit the module status information and spot check information through the Uart interface or the TX interface.

With regard to the module control module 31, the module control module 31 may also determine the type of module information carried in the received second serial signal. If the module information is the information used by the module control module 31 itself, for example, the module information is the afore-mentioned flash information of the lamp board, the module control module 31 may directly use the second serial signal. If the module information is the information to be transmitted by the module control module 31, for example, the module information is the afore-mentioned spot check information or the module status information, the module control module 31 may also convert the second serial signal into a second parallel signal carrying the module information, and transmit the second parallel signal to the controller 33 or the master computer through a network port for the user to view in a software.

In some embodiments of the present application, the process of converting the second serial signal into the second parallel signal by the module control device 31 may be realized by the afore-mentioned parallel-to-serial converter module (e.g., the master chip or the converter chip). For example, after the control module of the display module converts the TTL signal into Serdes signal and transmits the Serdes signal to the module control device 31, the converter chip of the module control device 31 may convert the Serdes signal into TTL signal and transmit the TTL signal to the controller 33.

In this manner, the module control device 31 may read back various module information from the display module, and realize the functions including evaluation, correction, parameter adjustment based on the various module information.

### Second embodiment:

With reference to the description of the first serial signal and the second serial signal, it may be seen that the signal may be transmitted bidirectionally between the plurality of display modules connected in series. In order to improve the signal reliability of the LED display screen and the control system thereof 30, in the embodiments of the present application, the display unit 32 may receive two identical signals based on the function of bidirectional transmission to realize backup of signals.

Specifically, the first serial signal may include a main serial signal and a backup serial signal, the main serial signal and the backup serial signal are signals sent to the same display unit 32 in different transmission directions. The control module of the display module may analyze the main image drive signal and the backup image drive signal from the main serial signal and backup serial signal, respectively.

When the main serial signal is in normal operation, the control module may control each display module to display the main image drive signal according to the drive control signal. When the main serial signal has abnormity, the control module may control each display module to display the backup image drive signal according to the drive control signal.

Where, "abnormity" may mean that the signal quality is lower than a quality threshold or the main serial signal is not received. The display module may determine whether the main serial signal has abnormity based on the received packet header and packet loss rate. Accordingly, "normal operation" may mean that the signal quality is higher than or equal to the quality threshold.

In some embodiments, the main serial signal may be connected to a head of the display unit 32 (the first cascaded display module), and the backup serial signal may be connected to a tail of the display unit 32 (the last cascaded display module). In other embodiments, the main serial signal may be connected to the tail of the display unit 32, and the backup serial signal may be connected to the head of the display unit 32. The present application is not limited thereto.

Specifically, the backup of the above-mentioned signals may specifically include backup mode between interactive interfaces, backup mode between module control devices, and backup mode between controllers.

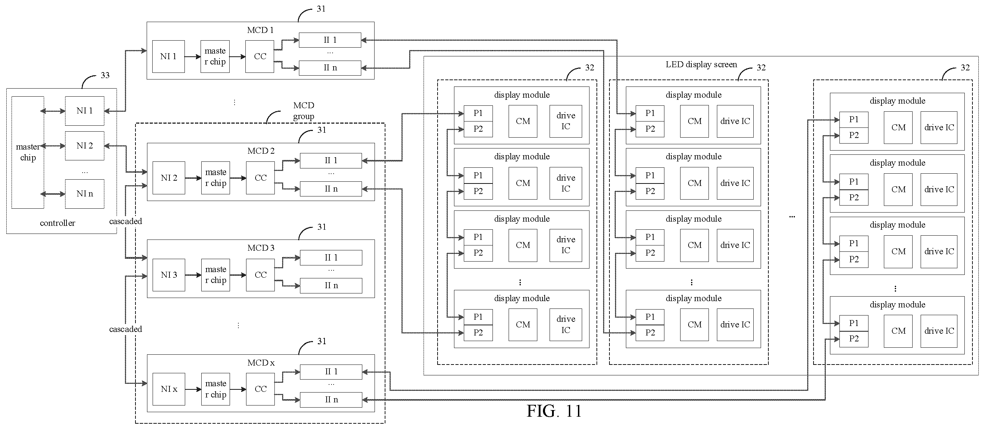

Referring to FIG. 11, the backup mode between the interactive interfaces is described as follows: the module control device 31 may include a main serial output interface and a backup main serial output interface. The main serial output interface and the backup serial output interface are different interactive interfaces of the same module control device 31 and are connected with the same display unit 32. The module control device 31 may transmit the main serial signal to the display unit 32 through the main serial output interface, and transmit the backup serial signal to the display unit 32 through the backup serial output interface. The display unit 32 may simultaneously receive the main serial signal transmitted through the main serial output interface and the backup serial signal transmitted through the backup serial output interface, and obtain the main image drive signal and the backup image drive signal through analysis, respectively. When the main serial signal is in normal operation, each display module may display the main image drive signal according to the drive control signal. When the main serial signal is abnormal, each display module displays the backup image drive signal according to the drive control signal.

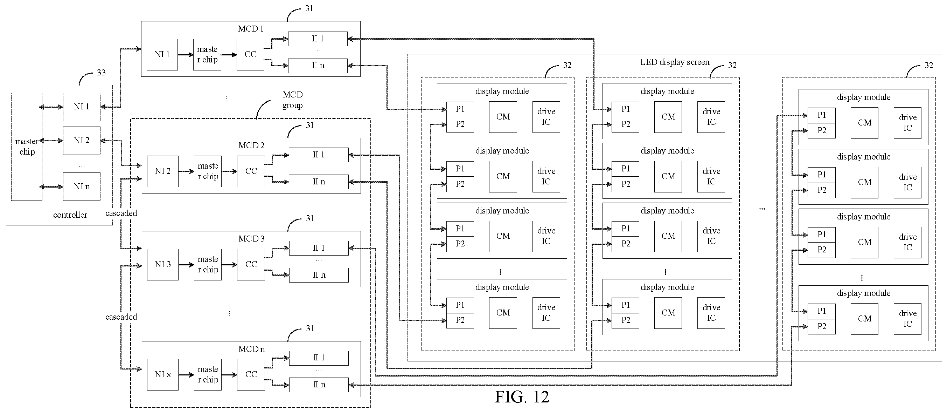

Referring to FIG. 12, the backup mode between module control devices is described as follows: the display unit 32 may be connected with the main module control device and the backup module control device at the same time, the main module control device and the backup module control device are different module control devices. The LED display screen and the control system thereof 30 may transmit the main serial signal to the display unit 32 through the main module control device, and transmit the backup serial signal to the display unit 32 through the backup module control device. The display unit 32 may receive the main serial signal sent from the main module control device and the backup serial signal sent from the backup module control device simultaneously, and obtain the main image drive signal and the backup image drive signal by analysis, respectively. When the main serial signal is normal, each display module may display the main image drive signal according to the drive control signal. When the main serial signal is abnormal, each display module displays the backup image drive signal according to the drive control signal.

The main module control device and the backup module control device shown in Figure 12 are connected to the same controller 33. In other embodiments, the main module control device and the backup module control device may also be connected with the main controller and the backup controller respectively, and the main controller and the backup controller are different controllers, so as to realize the backup between controllers. When the main controller works normally, the display module may display the main image drive signal generated from the image frame signals sent by the main controller according to the drive control signal. When the main controller is abnormal, the display module may display the backup image drive signal generated from the image frame signals sent by the backup controller according to the drive control signal.

It should be understood that the number of the backup module control devices, the backup serial output interfaces or the backup controllers may be multiple. By virtue of the backup mode between the interactive interfaces, the backup mode between the module control devices and the backup mode between the controllers, each display module in the display unit 32 may receive the identical first serial signal in at least two channels. When the first serial signal in one channel is abnormal, the display function may be realized by using the first serial signal in other channels, the reliability of signal transmission of the LED display screen and the control system thereof 30 is improved.

### Third embodiment:

In this embodiment, the driving IC and the decoding IC of the display module may display the image-drive-signal-to-be-displayed thereof according to the drive control signal. The acquisition manner of the drive control signal may be selected according to the actual situation.

In some embodiments, the module control device 31 may obtain drive control signals respectively corresponding to each display module, and take the drive control signal and the image drive signal together as the signals-to-be-transmitted, which is then converted into the first serial signal and is transmitted to each display module of the display unit 32. The master chip of the display module may perform a serial-to-parallel conversion on the first serial signal, and obtain the image-drive-signal-to-be-displayed of the display module and the corresponding drive control signal of the display module through analysis. Thus, the display module may display the image-drive-signal-to-be-displayed thereof according to the corresponding drive control signal thereof. The drive control signal may be obtained by the module control device 31 from the controller 33 or the master computer, and the drive control signals corresponding to different display modules may be identical or different. Since the control module of the display module does not need to generate the drive control signal, a chip having relatively lower processing capacity may be selected to be used as the display module in this embodiment to reduce the cost of the display module.

In some other embodiments, the module control device 31 may obtain generation parameters for generating the drive control signals corresponding to the display modules, and send the generation parameters to the plurality of display modules connected in series in the display unit 32. The generation parameters may also be obtained from the controller 33 or the master computer. The transmission mode of the generated parameters may be selected according to the actual situation. For example, the generation parameters and the image drive signal may be collectively served as the first serial signal and are sent to the plurality of display modules connected in series in the display unit 32 through the interactive interface (i.e., the serial output interface). The main control module of the display module may perform serial-to-parallel conversion on the first serial signal, obtain the image-drive-signal-to-be-displayed and the corresponding generation parameters of the display module through analysis, and generate the corresponding drive control signal thereof according to the corresponding generation parameters of the display module. Thus, the display module may display the image-drive-signal-to-be-displayed thereof according to the corresponding drive control signal thereof.

The generation parameters may specifically include parameters for generating OE/Gclk signals, Dclk signals, LAT signals, refresh rate signals, and scan control signals (or decoding signals), respectively. Specifically, the module control device 31 may obtain the generation parameters from the master computer, a user may set the generation parameters in the software of the master computer, and each display module may generate the same drive control signal according to the same generation parameters set by the user.

For example, the module control device 31 may obtain a frequency, a phase, a duty cycle and other parameters of the Dclk set by the user from the master computer, and use these parameters as the generation parameters for generating the Dclk signal. The module control device 31 may obtain OE polarity, Gclk frequency and distribution coefficient set by the user from the master computer, and use these parameters as the generation parameters for generating the oe/gclk signal. The module control device 31 may obtain a line blanking time, a line feed time, end time of afterglow control, vanishing mode, vanishing potential, gray level, refresh ratio and decoding mode set by the user from the master computer, and take these parameters as the generation parameters for generating a decoded signal.

In this implementation manner, the module control device 31 may send the generation parameters to the display unit 32 only when the generation parameters are obtained for the first time or when the generation parameters are changed, without the need of sending them in real time like image drive signals. Therefore, this implementation manner is conducive to reducing the data amount transmitted in real time, reducing the real-time transmission rate required by the LED display screen and the control system thereof 30, and further improving the transmission stability of the LED display screen and the control system thereof 30.

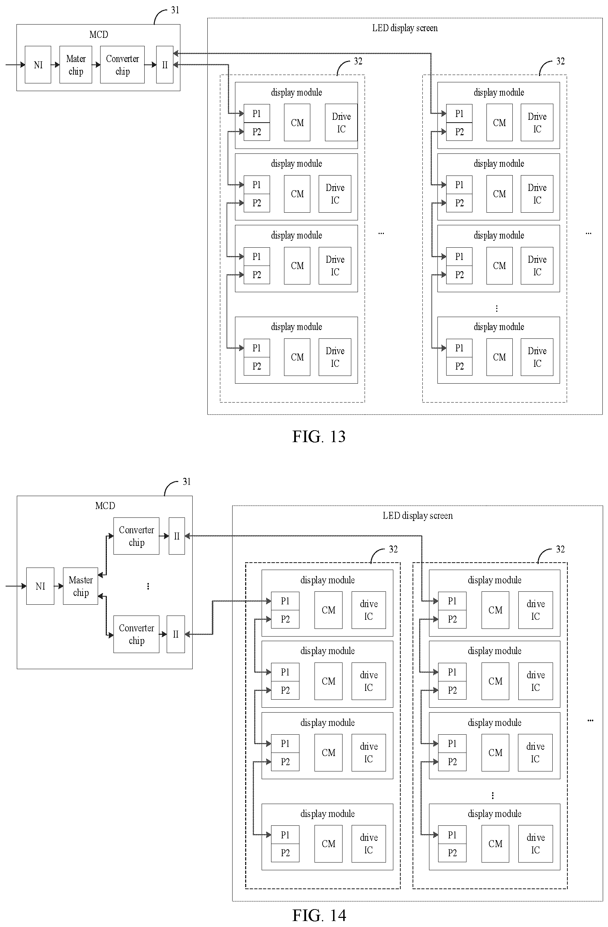

Referring to FIG. 13, due to the reduction of the amount of information transmitted in real time, one single module control device 31 may load N display units 32, n is a positive integer greater than or equal to 1. In other words, the module control device 31 having the same loading capacity may load different display units 32 through multiple interactive interfaces.

### Fourth embodiment:

In some embodiments of the present application, since each module control device 31 is serialized, is no longer constrained by the number of pins as compared to the parallel signal in the related art, the module control device 31 may increase the total number of pixels carried by the module control device 31 to a preset number threshold by improving the processing capacity of the master chip and/or converter chip, or by increasing the number of master chips. The number threshold may be adjusted according to the actual situation, for example, the number threshold may be increased to 512x1024, or even greater.

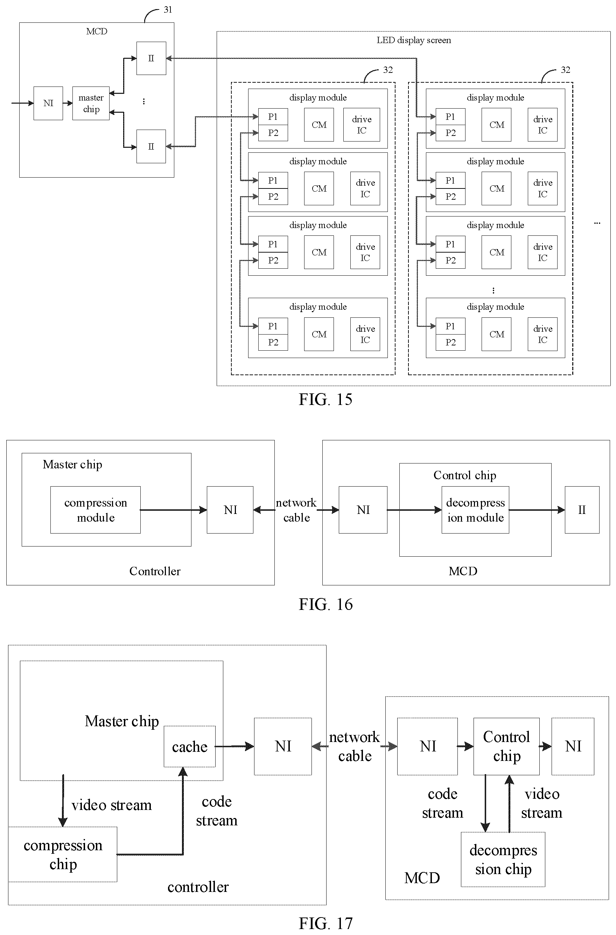

In this condition, the number of interactive interfaces on one single module control device 31 may be multiple. For example, the number may be 4, 8, etc. Each interactive interface in the module control device 31 may be connected with different display units 32. Thus, one single module control device 31 may load multiple display units 32 at the same time. FIG. 14 illustrates a schematic diagram of loading a plurality of display units 32 simultaneously by one single module control device 31 through a master chip, a converter chip and a plurality of interactive interfaces. FIG. 15 illustrates a schematic diagram of loading a plurality of display units 32 simultaneously by one single module control device 31 through a master chip and a plurality of interactive interfaces.

Specifically, the module control device 31 may include multi-channel parallel serial output interfaces, and the serial output interfaces are connected to different display units 32 respectively. Each of the serial output interfaces may be used to transmit the first serial signal of the connected display unit 32 to the display modules in the connected display unit 32. Furthermore, when the number of display units 32 is multiple, the single module control device 31 may load different display units 32 through the multi-channel parallel serial output interface.

In this way, the total number of module control devices 31 used by the entire LED display and its control system 30 may be reduced. Accordingly, the number of network cables between the controller 33 and the module control device 31 may be reduced, and the system stability may be improved. According to the experimental test, 16 module control devices are required to light up the 1080P display screen in the related art. However, according to the method provided in the embodiments of the present application for lighting up the 1080p display screen, 4 network transmission interfaces of the controller 33 may be used to load the module control devices. Each network transmission interface carries 480x1080 pixels respectively, and 4-port module control device is used for each network transmission interface. That is, the number of the module control devices used for lighting up 1080p display screen may be reduced to 4 module control devices.

In some other embodiments, The LED display screen and the control system thereof 30 may load different display units 32 respectively through a plurality of module control devices 31. The plurality of module control devices 31 may be independent of each other, or may be cascaded to form a group of module control devices as shown in Fig. 5, so as to be operated together.

The plurality of module control devices 31 may include one or multiple types of module control devices, and each type of module control device contains different number of interactive interfaces. For example, the module control device 31 may be a module control device having a single port, a module control device having double ports, a module control device having 4 ports, etc. The module control device 31 contained in the module control device group may be any one or multiple types of module control devices. In other words, the cascaded module control devices in the module control device group may have different load specifications.

Taking the network interface as the Gigabit network interface as an example, generally speaking, the Gigabit network interface may load about 690000 pixels theoretically. Assuming that the display area of a single module control device with 4-ports may load display area of 512x1024, the total number of pixels loaded by an interactive interface is about 130, 000. Thus, 6 interaction interfaces are required. At this time, two module control devices having single port and one module control device having 4-ports may be selected to be cascaded to form a module control device group. Alternatively, 3 module control devices having 2-ports may be selected to be cascaded to form a module control device group.

### Fifth embodiment:

In this embodiment, the image frame signals obtained by the module control device 31 may be compressed signals.

Specifically, in some embodiments, the controller 33 may be used to obtain the image frame signals to be displayed by the plurality of display modules, compress the image frame signals to be displayed by the plurality of display modules to obtain the compressed signal, and send the compressed signal to the connected module control device 31 through the network transmission interface.

For example, the afore-mentioned compression process may be implemented by a compression chip or a master chip in the controller 33. A compression method of the image frame signals may be selected according to the actual situation. The purpose of compression is to reduce the data amount of the image frame signals to be displayed by the plurality of display modules.

As an example, FIG. 16 illustrates a schematic diagram of a controller that uses a master chip to achieve compression. The master chip may use the internal compression module thereof to compress the image frame signals to be displayed by the plurality of display modules. Specifically, the master chip may perform compression processing by using a circuit inside the compression module, or use a computer program stored inside the compression module to invoke a corresponding compression algorithm (i.e., compression IP).

As another example, FIG. 17 illustrates a schematic diagram of a controller that uses a compression chip to achieve compression. The controller 33 may input the image frame signals to be displayed by the plurality of display modules into the compression chip. The compression chip may compress the image frame signals to be displayed by the plurality of display modules to obtain a code stream, and store the code stream in a cache of the master chip, in order that the code stream is transmitted to the module control device 31 through the network transmission interface.

Accordingly, the LED display screen and the control system thereof 30 need to realize the display function in the module control device 31 or the display module by decompressing.

Specifically, in some embodiments, the module control device 31 may be used to decompress the compressed signal to obtain the image frame signals to be displayed by the plurality of display modules, generate the image drive signal of the corresponding display module according to the image frame signals to be displayed by the plurality of display modules, and then take the image-drive-signal-to-be-displayed of each display module as the signals-to-be-transmitted, convert the signals-to-be-transmitted into the first serial signal, and send the first serial signal to the display unit 32 through the interactive interface.

In some other embodiments, the module control device 31 may be used to take the compressed signal as the signals-to-be-transmitted. In this case, the signals-to-be-transmitted may include image-frame-signals-to-be-decompressed of each display module. The module control device 31 may convert the signals-to-be-transmitted into the first serial signal and send the first serial signal to the display unit 32. The control module of each display module in the display unit 32 may analyze the image-frame-signals-to-be-decompressed of each display module from the first serial signal, decompress the image-frame-signals-to-be-decompressed to obtain the image frame signals to be displayed by the plurality of display modules, and then generate the corresponding image drive signal based on the image frame signals to be displayed by the plurality of display modules.

For example, the afore-mentioned decompression process may be realized by the decompression chip, the master chip in the module control device 31, or the decompression chip of the display module. The decompression method may also be selected according to the actual situation. The purpose of decompression is to restore the compressed signal and obtain the image drive signal actually used by the display module.

As an example, as shown in FIG. 16, the master chip of the module control device 31 may use the internal decompression module to decompress the compressed signal. Specifically, the master chip of the module control device 31 may perform decompression processing through the circuit inside the decompression module, or use the computer program stored in the decompression module to invoke the corresponding decompression algorithm (decompression IP).

As another example, as shown in FIG. 17, the master chip of the module control device 31 may transmit the code stream (compressed signal) to the decompression chip, and the decompression chip may output the video stream to the cache of the master chip after decompression of the video stream.

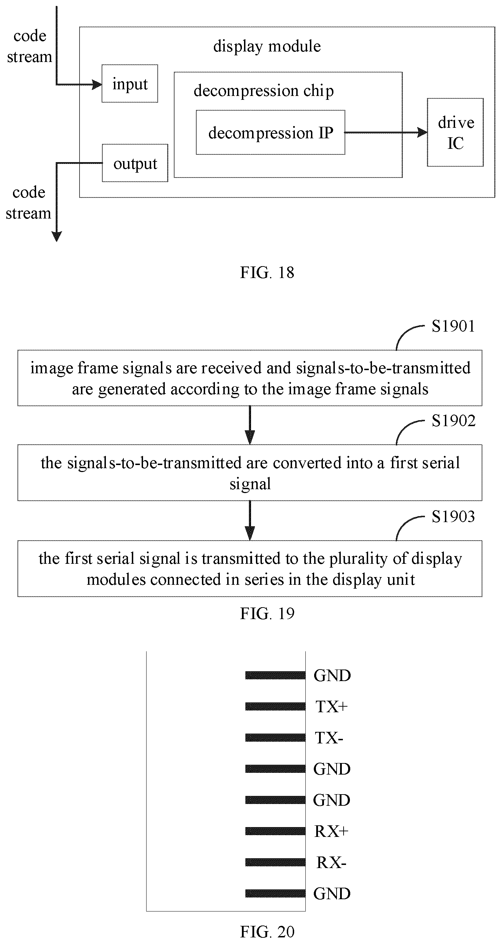

As another example, as shown in Fig. 18, a decompression chip may be arranged in the display module. The decompression chip may decompress the code stream (i.e., the image-frame-signals-to-be-decompressed) and store it in the cache. Due to this arrangement, the amount of data transmission of the interactive interface may be reduced, and the loading capacity of the module control device 31 is improved accordingly.

It should be noted that in the LED display screen and the control system thereof 30, when the controller 33 transmits the image frame signals to the module control device 31, the controller 33 may send the image frame signals of all display modules loaded by each module control device 31 to the corresponding module control device 31, respectively. Accordingly, when compressing the image frame signals, the controller 33 may respectively compress the image frame signals transmitted to different module control devices 31, and transmit the compressed signal to the corresponding module control devices 31 through the network transmission interface. The image frame signals sent to different module control devices 31 may be compressed in the same or different compression methods, which is not limited in the present application.

In the embodiments of the present application, the controller 33 may compress the image frame signals to reduce the data amount transmitted through the network port. Thus, one network port may load more display modules. Therefore, one same LED display requires fewer network ports and cables, and the cabling of the entire LED display and the control system thereof 30 is simplified and more stable, a hardware cost is reduced to a certain extent.

When the decompression process is realized by the display module, the signal transmitted through the interactive interface is also compressed, and the amount of data transmission is reduced. Thus, one interactive interface may load more display modules. Therefore, one LED display screen requires fewer interactive interfaces and connecting wires, and the entire LED display screen and the control system thereof 30 are simpler and more stable, the hardware cost is further reduced.

For example, for a conventional 1080P display screen, the controller 33 needs a plurality of network transmission interfaces with 1G transmission rate. According to the compression method provided in the present application, one single network transmission interface having 1G transmission rate may be used to complete the loading. The network transmission interface having 1G transmission rate may be connected with 4 cascaded module control devices 31 capable of loading 512x1024 pixel points.

Moreover, according to this compression method, one single module control device 31 may load more modules connected in series. For the same area of LED display screen, the number of required module control devices 31 is less, a high cost problem caused due to the excessive number of display control module devices is reduced, and the cost performance of the LED display screen and the control system thereof 30 is improved.

### Sixth embodiment:

In this embodiment, the maximum network transmission rate of the network transmission interface of the controller 33 may be greater than the preset rate threshold. The rate threshold may be adjusted according to the actual demand. For example, the network transmission interface may be a network transmission interface having 1G transmission rate, a network transmission interface with 2G transmission rate, a network transmission interface with 5G transmission rate, etc. The higher the maximum network transmission rate of the network transmission interface, the more pixels the network transmission interface may load. Fewer network transmission interfaces may be used to load the one same LED display screen, the connection mode of the entire LED display and the control system thereof 30 will be simplified, the stability of the LED display screen and the control system thereof 30 may be further improved.

With the improving of the load capacity of the network transmission interface, the module control device 31 connected to the network transmission interface may also adaptively improve the load capacity. For example, the master chip of the module control device 31 may be a FPGA (Field Programmable Gate Array) having high computing power. Or alternatively, the module control device 31 may use multiple master chips FPGA. Or alternatively, the master chip may use ARM (Advanced RISC Machines) chips or other specified chips. Or alternatively, the master chip is integrated with other module functions.

### Seventh embodiment:

In some embodiments, the LED display screen and the control system thereof 30 may also include one or more of the following functions:
First, one or more of the control modules of the master chip, the converter chip and the display module may have the signal enhancement function. Thus, the chip used to enhance the signal such as 74HC245 in the LED display screen and the control system thereof 30 in the related art may be omitted.

Second, the control module of the afore-mentioned converter chip and/or the display module may perform an error code detection, the error code detection may be used to detect whether the control module of the converter chip and/or the display module is has abnormity.

Third, the afore-mentioned LED display screen and the control system thereof 30 may also include a power supply. The module control device 31 obtains the power signal output by the display unit and transmits the power signal to the plurality of display modules connected in series in the display unit 32 to realize supplying power to the display modules. The power signal is transmitted between the display modules connected in series in the display unit 32, thereby reducing the number of power lines required by the display modules. In some embodiments, the power signal may be transmitted as part of the first serial signal through a connection line configured for transmitting the first serial signal. That is, the display module may realize supplying power through the power signal carried in the first serial signal. For example, supplying power may be implemented in the form of power over Ethernet (Power Over Ethernet, POE).

Four, one or more of the control modules of the master chip, the converter chip and the display modules may be configured with an indicator light for locating the position thereof.

Five, the plurality of display modules in the display unit 32 may be connected in series through wireless connection, and the control module of each display module in the display unit 32 may transmit the received first serial signal to the cascaded display module that communicates wirelessly with the display module itself.

It should be understood that the LED display screen and the control system thereof 30 may support any combination of the first embodiment, the second embodiment, the third embodiment, the fourth embodiment, the fifth embodiment, and the seventh embodiment when realizing the display function. For example, the LED display screen and the control system thereof 30 may compress and decompress signals while supporting the backup between interactive interfaces. For another example, the LED display screen and the control system thereof 30 may support the backup mode between the module control devices when adopting the network transmission interface with 5G transmission rate, and the plurality of module control devices 31 may be cascaded. Any combination of the first embodiment, the second embodiment, the third embodiment, the fourth embodiment, the fifth embodiment, and the seventh embodiment belongs to the protection scope of the present application.

Combined with the above descriptions, an LED display screen and a control system thereof 30 are provided in the embodiments of the present application, the LED display screen and the control system thereof 30 may include a module control device 31 and a display unit 32 connected with the module control device 31. The display unit 32 may include a plurality of display modules connected in series, and each display module is provided with a control module.

The module control device 31 may be used to generate the signals-to-be-transmitted, convert the signals-to-be-transmitted into a first serial signal, and transmit the first serial signal to the plurality of display modules connected in series in the display unit 32. The signals-to-be-transmitted may include an image-drive-signal-to-be-displayed of each display module in the display unit 32. The control module of the display module may be used to obtain the image-drive-signal-to-be-displayed of each display module from the first serial signal through analysis, and control each display module to display the image-drive-signal-to-be-displayed thereof according to the drive control signal.

In some embodiments, the LED display screen and the control system thereof 30 may also include a power supply connected to the module control device 31. The module control device 31 may also be used to obtain the power signal output by the power supply and transmit the power signal to the plurality of display modules connected in series in the display unit 32.

In some embodiments, the module control device 31 is provided with a master control chip and a converter chip. The master chip of the module control device 31 may be used to generate the signals-to-be-transmitted. The converter chip of the module control device 31 may be used to convert the signals-to-be-transmitted generated by the master chip of the module control device 31 into the first serial signal.

In some embodiments, the module control device 31 is provided with a master control chip; The master chip of the module control device 31 may be used to generate the signals-to-be-transmitted and convert the signals-to-be-transmitted into the first serial signal.

In some embodiments, the LED display screen and the control system thereof 30 also include a controller 33 connected to the module control device 31. The controller 33 may be used to obtain image frame signals to be displayed by the plurality of display modules and transmit the image frame signals to be displayed by the plurality of display modules to the module control device 31. The module control device 31 may be used to obtain the image frame signals to be displayed by the plurality of display modules sent from the controller 33, and generate the signals-to-be-transmitted according to image frame signals to be displayed by the plurality of display modules.

The specific functions and structures of the above-mentioned LED display screen and the control system thereof 30 may also be described with reference to FIGS. 3-18, and will not be repeatedly described in the present application.

As shown in FIG. 19, in the embodiments of the present application, an LED display control method is further provided. This LED display control method may be applied to the module control device 31, and includes steps S1901-S1903.

In the step of S1901, image frame signals are received and signals-to-be-transmitted are generated according to the image frame signals. The signals-to-be-transmitted may include an image-drive-signal-to-be-displayed of each display module in the display unit and drive control signals corresponding to the plurality of display modules. The display unit may include the plurality of display modules connected in series.

In the step of S1902, the signals-to-be-transmitted are converted into a first serial signal.

In the step of S1903, the first serial signal is transmitted to the plurality of display modules connected in series in the display unit.

Regarding the specific implementation process of the afore-mentioned LED display control method, reference can be made to the descriptions of the module control device 31 in the afore-mentioned LED display screen and the control system thereof 30.

Accordingly, in the embodiments of the present application, a module control device 31 is further provided, the module control device 31 is connected with the display unit 32, and the display unit 32 may include a plurality of display modules connected in series. The module control device 31 may include a signal generation module, a parallel-to-serial converter module, a transmission module, and a serial output interface connected to the display unit 32.

The signal generation module may be used to receive the image frame signals and generate the signals-to-be-transmitted according to the image frame signals. The signals-to-be-transmitted may include the image-drive-signal-to-be-displayed of each display module in the display unit 32 and the drive control signals corresponding to the plurality of display modules.

The parallel-to-serial converter module may be used to convert the signals-to-be-transmitted into the first serial signal.

The transmission module may be used to transmit the first serial signal to the plurality of display modules connected in series in the display unit 32 through the serial output interface.

In some embodiments, the parallel-to-serial converter module may be a master chip or a converter chip in the module control device 31.

In some embodiments, the parallel-to-serial converter module may be configured to convert the signals-to-be-transmitted that are input through the parallel input interface into the first serial signal that are output through the serial output interface. The serial output interface may be configured to transmit Serdes serial communication technology signals. The parallel input interface may be an interface for transmitting TTL communication technology signals, or be an interface for transmitting multi-channel LVDS communication technology signals. In some embodiments, the number of pins of the serial output interface may be less than the number of pins of the parallel input interface.

In some embodiments, the number of serial output interfaces may be multiple, and each serial output interface is used to transmit the first serial signal of the connected display unit 32 to the display module in the connected display unit 32.

In some embodiments, the serial output interface is connected to the display unit 32 through at least one pair of connecting wires. Each pair of connecting wires may be used to transmit signals. The specific number of the connecting wires may be changed according to the actual situation. If the module control device 31 loads more display modules, the module control device 31 may be connected to the display unit 32 through multiple pairs of connecting wires. Taking two pairs of connecting wires as an example, one pair of connecting wires may be used to transmit uplink signals, and the other pair of connecting wires may be used to transmit downlink signals.

In some embodiments, the serial output interface may include one or more wire ground terminal pins (GND) and multiple pairs of signal transmission pins, and the wire ground terminal pins may be arranged between any two pairs of signal transmission pins in the multiple pairs of signal transmission pins. The signal transmission pin includes, but is not limited to, RX signal pin and TX signal pin.

Specifically, the serial output interface may successively include one or more pairs of TX signal pins, one or more pairs of RX signal pins, and one or more GND signal pins. Since the amount of data transmitted by RX signal pins is relatively small, the number of RX signal pins may be less than the number of the TX signal pins. The GND signal pin may be arranged in the middle of other pins. For example, the GND signal pin may be arranged between one pair of TX signal pins and one pair of RX signal pins, or between one pair of TX signal pins and another pair of TX signal pins. Due to this arrangement, the probability of signal interference between signal pins may be reduced to a certain extent.

Take 8 pins (pins 1-8) as an example. In some embodiments, as shown in FIG. 20, pins 1, 4, 5 and 8 may be GND signal pins, pins 2 and 3 are a pair of TX signal pins, and pins 6 and 7 are a pair of RX signal pins. In other embodiments, pins 1 and 2 are a pair of TX signal pins, pins 3 and 4 are GND signal pins, pins 5 and 6 are another pair of TX signal pins, and pins 7 and 8 are a pair of RX signal pins.

Regarding the specific functions of the module control device 31, reference can be made to the above descriptions of the module control device 31 in the afore-mentioned LED display screen and the control system thereof 30.

As compared to the related art, in the embodiments of the present application, the module control device 31 may transmit the image drive signal and the drive control signal together in the form of the first serial signal to the plurality of display modules connected in series in the display unit 32. The control module of the display module does not need to generate the drive control signal, instead, the control module may select a chip having relatively low processing capacity. Thus, the cost of the display module may be reduced. Moreover, since the signal transmitted by the module control device 31 to the display module is a serial signal, the module control device 31 no longer needs to transmit parallel signals through the interactive interface on the HUB board, or transmit signals in parallel through the HUB type interface provided by the traditional module control device. By arranging the serial output interface as the interactive interface on the module control device 31, the same number of display modules as in the related art may be loaded (i.e., through the parallel loading approach of the HUB board). The parallel signal contained in the same LED data set in the related art will also be normalized to a serial signal. That is, the LED display screen and the control system thereof 30 support a standardized display with a fixed number of display modules, such as 16 display modules, 24 display modules, etc.

Accordingly, a parallel-to-serial converter module is further provided in the embodiments of the present application. The parallel-to-serial converter module is arranged in the module control device 31. The module control device 31 is connected with the display unit 32. The parallel-to-serial converter module may be configured to convert parallel signals-to-be-transmitted generated by the module control device 31 into the first serial signal. The signals-to-be-transmitted may include an image-drive-signal-to-be-displayed of each display module in the display unit 32 and the drive control signals respectively corresponding to the plurality of display modules. The first serial signal may be the signal transmitted by the module control device 31 to the plurality of display modules connected in series in the display unit 32.

The parallel-to-serial converter module may be the master chip or the converter chip in the module control device 31.

In some embodiments, the parallel-to-serial converter module may also be used to convert the second serial signal obtained by the module control device 31 into a second parallel signal. The second parallel signal is the module signal of the display module.

For example, referring to FIG. 7, the pins of the parallel-to-serial converter module may include: one or more pairs of LVDS TX pins, one pair of LVDS TCLK pins, and one or more pairs of TX pins. In some embodiments, one or more pairs of LVDS RX pins, one pair of LVDS RCLK pins, and/or one or more pairs of RX pins may also be included.

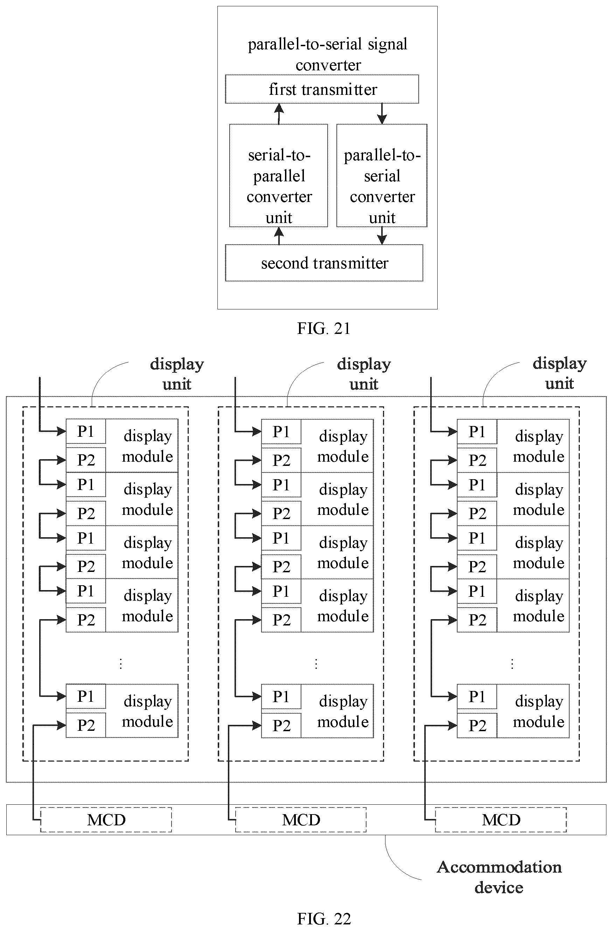

Specifically, referring to FIG. 21, FIG. 21 illustrates a structural diagram of a parallel-to-serial converter module. The parallel-to-serial converter module may include a first transmission unit, a serial-to-parallel converter unit, a parallel-to-serial converter unit and a second transmission unit. The first transmission unit may refer to a parallel transmission interface connected to a network port of the controller 33. The second transmission unit may refer to an interactive interface connected with the display unit.

The first transmission unit may be configured to receive the image frame signals, generate the signals-to-be-transmitted according to the image frame signals, or output the second parallel signal.

The parallel-to-serial converter unit may be configured to convert the signals-to-be-transmitted generated by the module control device 31 into a first serial signal.

The serial-to-parallel converter unit may be configured to convert the second serial signal obtained by the module control device 31 into a second parallel signal.

The second transmission unit may be configured to output a first serial signal or obtain a second parallel signal.

It should be understood that the afore-mentioned parallel-to-serial converter module may also include a buffer unit, a clock control unit and other units that assist in realizing the functions of the parallel-to-serial converter module.

Specifically, the parallel-to-serial converter module may include a processor and a memory in which a computer program may be stored. When the computer program is executed by the processor, the functions of the first transmission unit, the parallel-to-serial converter unit, the serial-to-parallel converter unit and the second transmission unit in the parallel-to-serial converter module may be realized.

Regarding the functions of the afore-mentioned parallel-to-serial converter module, reference can be made to the above descriptions of the master chip, the converter chip, the module control device 31, and the LED display screen and the control system thereof 30. The functions of the parallel-to-serial converter module will not be repeatedly described herein.

An LED display screen is further provided in other embodiments of the present application. The LED display screen includes one or more display units 32. At least some of the display units 32 include a plurality of display modules connected in series, and each display module is provided with a control module. The control module of the display module may be used to obtain the image-drive-signal-to-be-displayed of each display module in the same display unit 32 and the corresponding drive control signal of each display module in this display unit 32 by analysis from the first serial signal sent by the module control device 31, and control the display module to display the image-drive-signal-to-be-displayed of the display module according to the corresponding drive control signal thereof.

In some embodiments, the LED display screen may also include an accommodation device for accommodating the module control device 31. The accommodation device is provided with at least one module control device, and each module control device is connected with at least one display unit. The accommodation device may be integrally connected to or separated from the display unit.

For example, as shown in FIG. 22, 3 module control devices 31 may be arranged side by side on the accommodation device. Each module control device 31 is connected to the display unit 32 arranged on the accommodation device. The display units 32 connected to different module control devices 31 are spliced to form the display area of the LED display screen. The accommodation device shown in FIG. 22 is arranged below the display area of the LED display screen. In other embodiments, the accommodation device may also be arranged at any position according to the actual situation, such as the upper, the left side and the right side or the rear side of the LED display screen. In other embodiments, the accommodation device may also be separated from the LED display screen, for example, the accommodation device may be arranged at any position within a certain distance of the LED display screen.

In this embodiment, the user only needs to connect the controller 33 with the module control device 31 arranged on the accommodation device. The cabling is more simplified.

Compared to the related art, the LED display screen provided in the application may connect the plurality of display modules connected in series to form the display unit 32, and the serial signal transmitted by the module control device 31 may be transmitted between the plurality of display modules connected in series. In this way, each display module may obtain image-drive-signals-to-be-displayed of all display modules in the same display unit 32 and the drive control signals corresponding to all display modules in this display unit 32 from the serial signal through analysis, and further intercept the drive control signal thereof and the image drive signal thereof to realize the display function. In this way, each display module does not need to generate the drive control signal. Thus, a chip having relatively low processing capacity may be used, and the entire cost of LED display screen may be reduced.

In addition, according to this method, each display module does not need to be directly connected to the module control device 31 through a connection line. In the display unit 32, only one display module needs to be directly connected to the module control device 31 so as to obtain the first serial signal sent by the module control device 31 and send the first serial signal to other display modules connected in series. It may be seen that the number of connecting wires between the module control device 31 and the LED display screen is reduced. Thus, the cabling of the entire LED display screen and the control system thereof 30 is simplified.

Accordingly, an LED display module is further provided in the embodiments of the present application. The LED display module and other display modules may be connected in series to form a display unit 32. The display unit 32 is connected with the module control device 31, The LED display module is provided with a control module. The control module of the display module may be used to obtain the image-drive-signal-to-be-displayed of each display module in the same display unit 32 and the corresponding drive control signal of each display module in this display unit 32 from the first serial signal sent by the module control device 31 through analysis, and control the display module to display the image-drive-signal-to-be-displayed of the display module according to its corresponding drive control signal thereof.

Regarding the specific functions of the display module, reference can be made to the above descriptions of the display module in the display unit 32 of the LED display screen and the control system thereof 30.

Accordingly, a control module is further provided in the embodiments of the present application, and the control module is arranged in the display module. The display module and other display modules may be connected in series to form a display unit 32. The display unit 32 is connected with the module control device 31. The control module may be used to obtain the image-drive-signal-to-be-displayed of each display module in the same display unit 32 from the first serial signal sent by the module control device 31 through analysis, and control displaying of the image-drive-signal-to-be-displayed according to the drive control signal.

In some embodiments, the control module may be specifically configured to convert the first serial signal input through the serial input interface into the image drive signal and the drive control signal to be displayed by each display module and output through the parallel output interface, so as to obtain the image-drive-signal-to-be-displayed thereof and the corresponding drive control signal thereof from the image drive signal and the drive control signal to be displayed by each display module in the same display unit 32. The serial input interface may be used to transmit Serdes serial communication technology signals. The parallel output interface may be an interface for transmitting multi-channel LVDS communication technology signals, or be an interface for transmitting TTL communication technology signals.

In some embodiments, the control module may be specifically configured to obtain the image-drive-signal-to-be-displayed thereof from the first serial signal through analysis, and generate the corresponding drive control signal thereof according to generation parameters sent by the module control device 31.

In some embodiments, the control module may also be configured to obtain the module information of the display module and convert the module information into a second serial signal. The second serial signal is the signal transmitted by the display module to the module control device 31.

For example, referring to FIG. 9. The pins of the control module may include: one or more pairs of RX pins, one or more pairs of TX1 pins, one or more groups of image drive signal pins (R1 to RX, G1 to GX, and B1 to BX), one or more scan control signal pins, one or more drive control signal pins, and SPI interface pins.

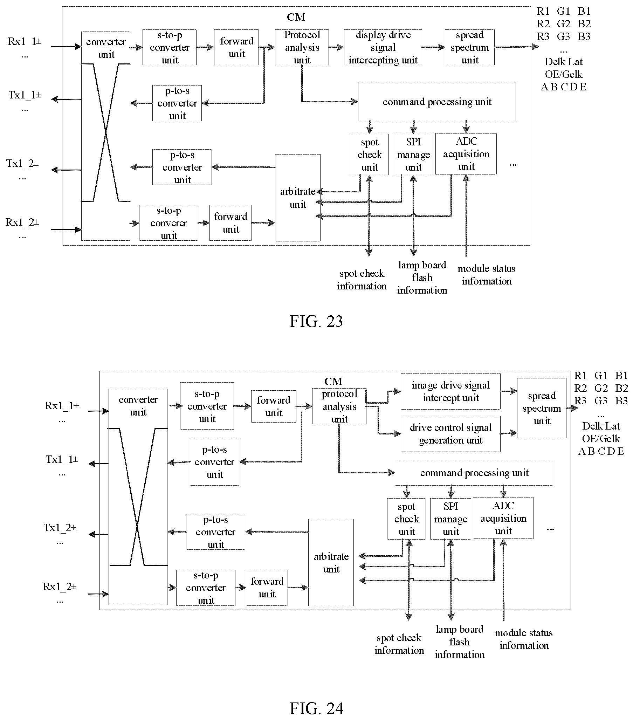

Specifically, referring to FIG. 23, FIG. 23 illustrates a first structural diagram of the control module. The control module may include a serial-to-parallel converter unit, a parallel-to-serial converter unit, a forwarding unit, a protocol analysis unit, a display drive signal interception unit, a frequency spreading unit, a command processing unit, and an arbitration unit.

The serial-to-parallel converter unit may be configured to convert the first serial signal into an image-drive-signal-to-be-displayed of each display module and the drive control signal respectively corresponding to each display module.

The forwarding unit may be configured to process the image-drive-signal-to-be-displayed of each display module and the drive control signal respectively corresponding to each display module, and transmit the processed signal to a cascaded display module connected in series with the display module through conversion of the parallel-to-series converter unit. The processing of the forwarding unit may include updating the sorting information, and then generating a new first serial signal forwarded to the cascaded display module through the conversion of the parallel-to-serial converter unit.

The protocol analysis unit may be configured to analyze the image drive signal and the drive control signal. Specifically, the analysis of the protocol analysis unit may include distinguishing the image drive signal from the drive control signal.

The display drive signal intercepting unit may be configured to intercept the image-drive-signal-to-be-displayed of the display module from the image-drive-signal-to-be-displayed of each display module, and intercept the drive control signal corresponding to the display module from the drive control signal respectively corresponding to each display module.

The frequency spreading unit may be configured to perform a frequency spreading processing according to the image-drive-signal-to-be-displayed of the display module and the drive control signal corresponding to the display module, and control the display module to display the image-drive-signal-to-be-displayed of the display module according to the corresponding drive control signal thereof. The spread frequency processing may improve the EMC (electromagnetic compatibility) effect, which includes, but is not limited to, RGB beat error, filtering and other processing.

The command processing unit may be configured to process the command to obtain the module information of the display module. Specifically, the command processed by the command processing unit may be the read back command sent by the master computer or the module control device, or the lamp board command sent by the lamp board. In some embodiments, the command processing unit may obtain spot check information, lamp board flash information and module status information respectively through a spot check unit, a SPI management unit and an ADC acquisition unit according to a read back command.

The arbitration unit may be configured to process module information and signals received from the cascaded display module. The specific processing includes, but is not limited to, packaging, transmitting module information and signals received from the cascaded display module according to a predetermined transmission sequence, etc.

The parallel-to-serial converter unit may be configured to convert the module information into a second serial signal.

In some embodiments, the afore-mentioned control module may also include a converter unit, the converter unit is connected with the serial-to-parallel converter unit and/or the parallel-to-serial converter unit, and may be used to configure a circuit direction, in order that the signal (e.g., the return signal, the signal received from the cascaded display module, the first serial signal, etc.) is input or output from the interface at the corresponding position.

It should be noted that, as shown in FIG. 23, two serial-to-parallel converter units and two parallel-to-serial converter units may be provided, one serial-to-parallel converter unit and one parallel-to-serial converter unit may be configured to receive and transmit the main serial signal, the other serial-to-parallel converter unit and the other parallel-to-serial converter unit may be configured to receive and transmit the backup serial signal and the module information.

In other embodiments, referring to FIG. 24, FIG. 24 illustrates a schematic diagram of a second structure of the control module. As compared to the control module shown in FIG. 23, the display drive signal interception unit of the control module is replaced with the image drive signal interception unit and the drive control signal generation unit.

Specifically, the control module may include a serial-to-parallel converter unit, a parallel-to-serial converter unit, a forwarding unit, a protocol analysis unit, an image drive signal interception unit, a drive control signal generation unit, a spread frequency unit, a command processing unit, and an arbitration unit.

The serial-to-parallel converter unit may be configured to convert the first serial signal into an image-drive-signal-to-be-displayed of each display module and drive control signals respectively corresponding to each display module.

The forwarding unit may be configured to process the image-drive-signal-to-be-displayed of each display module and the drive control signal respectively corresponding to each display module, and transmit the processed signal to the cascaded display module connected in series with the display module through conversion of the parallel-to-series converter unit. The processing of the forwarding unit may include updating sorting information, and then generating a new first serial signal forwarded to the cascaded display module through the conversion of the parallel-to-serial converter unit.

The protocol analysis unit may be configured to analyze the image drive signal and the drive control signal. Specifically, the analysis of the protocol analysis unit may include distinguishing the image drive signal and the drive control signal, in order to send the image drive signal to the image drive signal interception unit and send the drive control signal to the drive control signal generation unit.

The image drive signal intercepting unit may be configured to intercept the image-drive-signal-to-be-displayed of the display module itself from the image-drive-signal-to-be-displayed of each display module.

The drive control signal generation unit may be configured to generate the drive control signal corresponding to the display module itself according to generation parameters.

The frequency spreading unit may be configured to perform frequency spreading processing according to the image-drive-signal-to-be-displayed of the display module and the drive control signal corresponding to the display module, so as to control the display module to display the image-drive-signal-to-be-displayed of the display module according to the drive control signal corresponding to the display module. The spread frequency processing may improve the EMC (electromagnetic compatibility) effect, which includes, but not limited to, RGB beat error, filtering and other processing.

The command processing unit may be configured to process a command to obtain the module information of the display module. Specifically, the command processed by the command processing unit may be a read back command sent by the master computer or the module control device, or a lamp board command sent by a lamp board. In some embodiments, the command processing unit may obtain spot check information, lamp board flash information and module status information respectively through a spot check unit, a SPI management unit and an ADC acquisition unit according to the read back command.

The arbitration unit may be configured to process the module information and signals received from the cascaded display module. The specific processing includes, but is not limited to, packaging, transmitting the module information and the signals received from the cascaded display module according to a predetermined transmission sequence, and so on.

The parallel-to-serial converter unit may be configured to convert the module information into a second serial signal.

In some embodiments, the afore-mentioned control module may also include a converter unit. The converter unit is connected with the serial-to-parallel converter unit and/or the parallel-to-serial converter unit, and may be configured to configure the circuit direction, in order that the signal (e.g., the return signal, the signal received from the cascaded display module, the first serial signal, etc.) is input or output from the interface at the corresponding position.

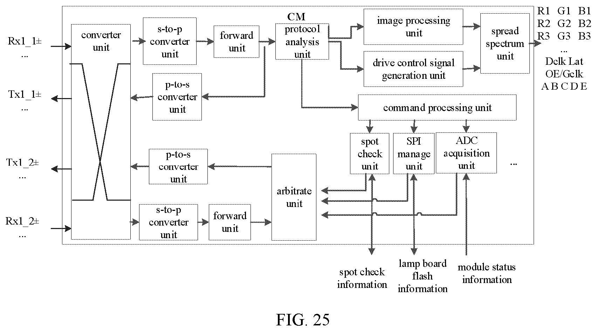

In addition, as shown in FIG. 25, the control module may also include a serial-to-parallel converter unit, a parallel-to-serial converter unit, a forwarding unit, a protocol analysis unit, an image drive signal interception unit, an image processing unit, a frequency spreading unit, a command processing unit, and an arbitration unit.

The serial-to-parallel converter unit may be configured to convert a first serial signal into an image frame signals to be displayed by the plurality of display modules and drive control signals respectively corresponding to each display module.

The forwarding unit may be configured to process the image frame signals to be displayed by the plurality of display modules and the drive control signal corresponding to each display module, and transmit the processed signal to the cascaded display module connected in series with the display module through conversion of the parallel-to-series converter unit. The processing of the forwarding unit may include updating sorting information, and generating a new first serial signal forwarded to the cascaded display module through the conversion of the parallel-to-serial converter unit.

The protocol analysis unit may be configured to analyze the image frame signals and the drive control signal. Specifically, the analysis of the protocol analysis unit may include distinguishing the image frame signals from the drive control signals, in order to send the image frame signals to the image processing unit and send the drive control signals to the drive control signal generation unit.

The image processing unit may be configured to intercept the image frame signal of the display module from the image frame signals to be displayed by the plurality of display modules, and generate the image driving sequence number to be displayed according to the image frame signal of the display module.

The drive control signal generation unit may be configured to generate the drive control signal corresponding to the display module according to generation parameters.

The frequency spreading unit may be configured to perform frequency spreading processing according to the image-drive-signal-to-be-displayed of the display module and the drive control signal corresponding to the display module, and control the display module to display the image-drive-signal-to-be-displayed of the display module according to the drive control signal corresponding to the display module. The spread frequency processing may improve the EMC (electromagnetic compatibility) effect, which includes, but not limited to, RGB beat error, filtering and other processing.

The command processing unit may be configured to process the command to obtain the module information of the display module. Specifically, the command processed by the command processing unit may be the read back command sent by the master computer or the module control device, or the lamp board command sent by the lamp board. In some embodiments, the command processing unit may obtain the spot check information, lamp board flash information and module status information respectively through the spot check unit, the SPI management unit and the ADC acquisition unit according to the read back command.

The arbitration unit may be configured to process the module information and the signals received from the cascaded display module. The specific processing includes, but is not limited to, packaging, transmitting the module information and the signals received from the cascaded display module according to a predetermined transmission sequence, and so on.

The parallel-to-serial converter unit may be configured to convert the module information into a second serial signal.

In some embodiments, the afore-mentioned control module may also include a converter unit. The converter unit is connected with the serial-to-parallel converter unit and/or the parallel-to-serial converter unit, and may be configured to configure the circuit direction, in order that the signal (e.g., the return signal, the signal received from the cascaded display module, the first serial signal, etc.) is input or output from the interface at the corresponding position.

It should be understood that the afore-mentioned parallel-to-serial converter module may also include a cache unit, a clock control unit, a spot check unit, a SPI management unit, an ADC acquisition unit and other units which facilitate in realizing the functions of the parallel-to-serial converter module.

Specifically, the afore-mentioned signal processing unit may include a processor and a memory, a computer program may be stored in the memory. When the computer program is executed by the processor, the functions of the serial-to-parallel converter unit, the parallel-to-serial converter unit, the forwarding unit, the protocol analysis unit, the display drive signal interception unit, the frequency spreading unit, the command processing unit, and the arbitration unit and the control module as shown in FIG. 23 may be implemented. Alternatively, when the computer program is executed by the processor, the functions of the serial-to-parallel converter unit, the parallel-to-serial converter unit, the forwarding unit, the protocol analysis unit, the image drive signal interception unit, the drive control signal generation unit, the frequency spreading unit, the command processing unit, and the arbitration unit as shown in FIG. 24 may be realized. Alternatively, when the computer program is executed by the processor, the functions of the serial-to-parallel converter unit, the parallel-to-serial converter unit, the forwarding unit, the protocol analysis unit, the image processing unit, the drive control signal generation unit, the frequency spreading unit, the command processing unit, and the arbitration unit as shown in FIG. 25 may be realized.

Regarding the specific functions of the afore-mentioned control module, reference can be made to the above descriptions of the control module of the display module of the LED display screen and the control system thereof 30. The specific functions of the control module are not repeatedly described herein.

A person of ordinary skill in the art may understand that the afore-mentioned LED display screen and the control system thereof 30, or the controller 33, the module control device 31 and the display unit 32 in the LED display screen and the control system thereof 30 may also include more or fewer components, or combine some components or different components. For example, the controller 33 may also include an input/output device, a network access device, a bus, etc.

The person of ordinary skill in the art may clearly understand that, for the convenience of description and for conciseness, the dividing of the various functional units and functional modules is merely described according to examples. In an actual application, these functions may be assigned to different functional units and functional modules to be accomplished, that is, an inner structure of the device is divided into different functional units or modules to accomplish the whole or some of functionalities described above. The various functional units and modules in the embodiments may be integrated into a processing unit, or each of the units exists independently and physically, or two or more than two of the units are integrated into a single unit. The aforementioned integrated unit may either by actualized in the form of hardware or in the form of software functional units. In addition, specific names of the various functional units and modules are only used to be distinguished from each other conveniently, rather than being intended to limit the protection scope of the present application. Regarding the specific operating process of the units and modules in the aforementioned system, reference may be made to a corresponding process in the aforementioned method embodiments. This specific operating process of the units and modules is not repeatedly described herein. In the afore-mentioned embodiments, the descriptions of the various embodiments are emphasized respectively, regarding a part of one embodiment which has not been described or disclosed in detail, reference can be made to relevant descriptions in other embodiments. The foregoing embodiments are only intended to explain the technical solutions of the present application, rather than limiting the technical solutions of the present application. Although the present application has been described in detail with reference to these embodiments, a person of ordinary skilled in the art should understand that, the technical solutions disclosed in the embodiments may also be amended, some technical features in the technical solutions may also be equivalently replaced. The amendments or the equivalent replacements don't cause the essence of the corresponding technical solutions to be deviated from the spirit and the scope of the technical solutions in the embodiments of the present application, and thus should all be included in the protection scope of the present application.

## Claims

1. An LED display control method, **characterized in that**, the LED display control method comprises:
generating signals-to-be-transmitted by a module control device, wherein the display unit comprises a plurality of display modules connected in series, and the signals-to-be-transmitted comprise an image-drive-signal-to-be-displayed of each display module; converting, by the module control device, the signals-to-be-transmitted into a first serial signal and transmitting the first serial signal to the plurality of display modules connected in series in the display unit;
separately analyzing, by a control module of each display module in the display unit, the first serial signal to obtain the image-drive-signal-to-be-displayed of the display module, so as to control the display module to display the image-drive-signal-to-be-displayed thereof according to a drive control signal.

2. The LED display control method according to claim 1, **characterized in that**, the signals-to-be-transmitted further comprises drive control signals respectively corresponding to each display module;
said separately analyzing, by the control module of each display module in the display unit, the first serial signal to obtain the image-drive-signal-to-be-displayed of the display module, so as to control the display module to display the image-drive-signal-to-be-displayed thereof according to the drive control signal comprises:
by the control module of each display module in the display unit, performing a serial-to-parallel signal conversion on the first serial signal, and obtaining the image-drive-signal-to-be-displayed of the display module and the drive control signal corresponding to the display module through analysis, and controlling the display module to display the image-drive-signal-to-be-displayed of the display module according to the drive control signal corresponding to the display module.

3. The LED display control method according to claim 1, **characterized in that**, the signals-to-be-transmitted further comprises generation parameters for generating the drive control signal respectively corresponding to each display module;
said separately analyzing, by the control module of each display module in the display unit, the first serial signal to obtain the image-drive-signal-to-be-displayed of the display module, and controlling the display module to display the image-drive-signal-to-be-displayed of the display module according to the drive control signal corresponding to the display module comprises:
by the control module of each display module in the display unit, performing a serial-to-parallel signal conversion on the first serial signal to obtain the image-drive-signal-to-be-displayed of the display module and the generation parameters corresponding to the display module, and generating the corresponding drive control signal according to the generation parameters corresponding to the display module, and controlling the display module to display the image-drive-signal-to-be-displayed of the display module according to the drive control signal corresponding to the display module.

4. The LED display control method according to claim 2, **characterized in that**, said by the control module of each display module in the display unit, performing the serial-to-parallel signal conversion on the first serial signal and obtaining the image-drive-signal-to-be-displayed of the display module and the drive control signal corresponding to the display module through analysis comprises:
by the control module of each display module in the display unit, converting the first serial signal into a first parallel signal and intercepting a sub-parallel signal from the first parallel signal, wherein the sub-parallel signal comprises the image-drive-signal-to-be-displayed of each display module and the drive control signal corresponding to the display module.

5. The LED display control method according to claim 1, **characterized in that**, after said converting the signals-to-be-transmitted into the first serial signal and transmitting the first serial signal to the plurality of display modules connected in series in the display unit by the module control device, the LED display control method further comprises:
by the control module of each display module, transmitting the received first serial signal to a cascaded display module being in wireless communication with the display module.

6. The LED display control method according to claim 1, **characterized in that**, the LED display control method further comprises:
by the control module of the display module, obtaining module information of the display module and transmitting the module information to the module control device in a form of a second serial signal.

7. The LED display control method according to claim 6, **characterized in that**,, the module information is correction information of LED lamp beads in the display module; and/or,
the module information is module state information of the display module; and/or,
the module information is spot check information of the LED lamp beads in the display module.

8. The LED display control method according to claim 6, **characterized in that**, after said transmitting the module information to the module control device in the form of the second serial signal by the display module, the LED display control method further comprises:
converting the second serial signal into a second parallel signal by the module control device, wherein the second parallel signal carries the module information, and the second parallel signal is a signal to be transmitted to a controller by the module control device.

9. The LED display control method according to claim 1, **characterized in that**, the module control device is provided with a master chip and a converter chip;
said generating the signals-to-be-transmitted by the module control device comprises:
generating the signals-to-be-transmitted by the master chip of the module control device;
said converting the signals-to-be-transmitted into the first serial signal by the module control device comprises:
converting, by the converter chip of the module control device, the signals-to-be-transmitted generated by the master chip of the module control device into the first serial signal.

10. The LED display control method according to claim 1, **characterized in that**, the module control device is provided with a master chip;
said generating the signals-to-be-transmitted by the module control device comprises:
generating the signals-to-be-transmitted by the master chip of the module control device;
said converting the signals-to-be-transmitted into the first serial signal by the module control device comprises:
converting the signals-to-be-transmitted into the first serial signal by the master chip of the module control device.

11. The LED display control method according to claim 1, **characterized in that**, before said generating the signals-to-be-transmitted by the module control device, the LED display control method comprises:
by a controller, obtaining an image frame signals to be displayed by the plurality of display modules and compressing the image frame signals to be displayed by the plurality of display modules to obtain a compressed signal; and
transmitting, by the controller, the compressed signal to the module control device.

12. The LED display control method according to claim 11, **characterized in that**, said generating the signals-to-be-transmitted by the module control device comprises:
by the module control device, obtaining the compressed signal and decompressing the compressed signal to obtain the image frame signals to be displayed by the plurality of display modules, and generating the signals-to-be-transmitted according to the image frame signals.

13. The LED display control method according to any one of claims 1 to 12, **characterized in that**, the first serial signal carries sorting information;
said transmitting, by the module control device, the first serial signal to the plurality of display modules connected in series in the display unit comprises:
transmitting, by the module control device, the first serial signal to a first cascaded display module in the display unit; and
by the control module of each display module in the display unit, updating the sorting information carried in the received first serial signal and forwarding the first serial signal with updated sorting information to a next cascaded display module.

14. The LED display control method according to any one of claims 1 to 12, **characterized in that**, the first serial signal comprises a master serial signal and a backup serial signal, wherein the master serial signal and the backup serial signal are signals sent to the same display unit in different transmission directions;
said analyzing, by the control module of the display module, the first serial signal to obtain the image-drive-signal-to-be-displayed of the display module, and controlling the display module to display the image-drive-signal-to-be-displayed thereof according to the drive control signal, comprises:
by the control module of the display module, separately analyzing the master serial signal and the backup serial signal to obtain a master image drive signal and a backup image drive signal;
by the control module of the display module, controlling the display module to display the master image drive signal according to the drive control signal, and controlling the display module to display the backup image drive signal according to the drive control signal when the master serial signal is abnormal.

15. The LED display control method according to any one of claims 1 to 12, **characterized in that**, said transmitting, by the module control device, the first serial signal to the plurality of display modules connected in series in the display unit comprises:
by the module control device, transmitting the master serial signal to the display unit through a master serial output interface, and transmitting the backup serial signal to the display unit through a backup serial output interface, wherein the master serial output interface and the backup serial output interface are different serial output interfaces of the same module control device.

16. The LED display control method according to any one of claims 1 to 12, **characterized in that**, the module control device comprises a master module control device and a backup module control device, wherein the master module control device and the backup module control device are different module control devices;
said transmitting, by the module control device, the first serial signal to the plurality of display modules connected in series in the display unit comprises:
transmitting, by the master module control device, the master serial signal to the display unit; and
transmitting, by the backup module control device, the backup serial signal to the display unit.

17. An LED display screen and a control system thereof, **characterized in that**, the LED display screen and the control system thereof comprise a module control device and a display unit connected with the module control device, the display unit comprises a plurality of display modules connected in series, and each display module is provided with a control module;
the module control device is configured to generate signals-to-be-transmitted, convert the signals-to-be-transmitted into a first serial signal, and transmit the first serial signal to the plurality of display modules connected in series in the display unit, wherein the signals-to-be-transmitted comprise an image-drive-signal-to-be-displayed of each display module in the display unit;
a control module of the display module is configured to analyze the first serial signal to obtain an image-drive-signal-to-be-displayed of the display module, and control the display module to display the image-drive-signal-to-be-displayed of the display module according to a drive control signal.

18. The LED display screen and the control system thereof according to claim 17, **characterized in that**, the LED display screen and the control system thereof further comprise a power supply connected to the module control device;
wherein the module control device is further configured to obtain a power signal output by the power supply, and transmit the power signal to the plurality of display modules connected in series in the display unit.

19. The LED display screen and the control system thereof according to claim 17, **characterized in that**, the module control device is provided with a master chip and a converter chip;
the master chip of the module control device is configured to generate the signals-to-be-transmitted; and
the converter chip of the module control device is configured to convert the signals-to-be-transmitted generated by the master chip of the module control device into the first serial signal.

20. The LED display screen and the control system thereof according to claim 17, wherein the module control device is provided with a master chip;
the master chip of the module control device is configured to generate the signals-to-be-transmitted, and convert the signals-to-be-transmitted into the first serial signal.

21. The LED display screen and the control system thereof according to any one of claims 17 to 20, **characterized in that**, the LED display screen and the control system thereof further comprise a controller connected to the module control device;
the controller is configured to obtain image frame signals to be displayed by the plurality of display modules, and transmit the image frame signals to be displayed by the plurality of display modules to the module control device; and
the module control device is configured to obtain the image frame signals to be displayed by the plurality of display modules sent by the controller, and generate the signals-to-be-transmitted according to the image frame signals to be displayed by the plurality of display modules.

22. An LED display control method, **characterized in that**, the LED display control method comprises:
receiving image frame signals, and generating signals-to-be-transmitted according to the image frame signals, wherein the display unit comprises a plurality of display modules connected in series, the signals-to-be-transmitted comprise an image-drive-signal-to-be-displayed of each display module in the display unit and drive control signals respectively corresponding to each display module;
converting the signals-to-be-transmitted into a first serial signal; and
transmitting the first serial signal to the plurality of display modules connected in series in the display unit.

23. A module control device, **characterized in that**, the module control device is configured to control a display unit comprising a plurality of display modules connected in series, and the module control device comprises a signal receiving module, a parallel-to-serial conversion module, a transmission module, and a serial output interface connected to the display unit;
wherein the signal generation module is configured to receive image frame signals, and generate signals-to-be-transmitted according to the image frame signals, the signals-to-be-transmitted comprise an image-drive-signal-to-be-displayed of each display module in the display unit and drive control signals respectively corresponding to each display module;
the parallel-to-serial conversion module is configured to convert the signals-to-be-transmitted into a first serial signal; and
the transmission module is configured to transmit the first serial signal to the plurality of display modules connected in series in the display unit through the serial output interface.

24. The module control device according to claim 23, **characterized in that**, the parallel-to-serial conversion module is a master chip or a converter chip in the module control device.

25. The module control device according to claim 23, **characterized in that**, the parallel-to-serial conversion module is configured to convert the signals-to-be-transmitted transmitted through a parallel input interface into the first serial signal output through the serial output interface.

26. The module control device according to claim 25, wherein the serial output interface is an interface configured to transmit a Serdes serial communication technology signal.

27. The module control device according to claim 25, **characterized in that**, the parallel input interface comprises a plurality of interfaces configured to transmit LVDS communication technology signals, alternatively, the parallel input interface is an interface configured to transmit a TTLcommunication technology signal.

28. The module control device according to claim 25, wherein a number of pins of the serial output interface is less than a number of pins of the parallel input interface.

29. The module control device according to claim 23, **characterized in that**, a plurality of serial output interfaces are provided, and the plurality of serial output interfaces are respectively configured to transmit the first serial signal of the display unit connected thereto to the plurality of display modules connected in series in the display unit connected thereto.

30. The module control device according to any one of claims 23 to 29, wherein the serial output interface comprises one or a plurality of wire ground terminal pins and a plurality of pairs of signal transmission pins, and each wire ground terminal pin is arranged between any two pairs of signal transmission pins of the plurality of pairs of signal transmission pins.

31. A parallel-to-serial conversion module, **characterized in that**, the parallel-to-serial conversion module is arranged in a module control device, the module control device is connected to a display unit, and the display unit comprises a plurality of display modules connected in series;
the parallel-to-serial conversion module is configured to convert parallel signals-to-be-transmitted generated by the module control device into a first serial signal, wherein the signals-to-be-transmitted comprise an image-drive-signal-to-be-displayed of each display module in the display unit and drive control signals respectively corresponding to each display module, and the first serial signal is a signal transmitted to the plurality of display modules connected in series in the display unit through the module control device.

32. The parallel-to-serial conversion module according to claim 31, **characterized in that**, the parallel-to-serial conversion module is further configured to convert a second serial signal obtained by the module control device into a second parallel signal, wherein the second parallel signal is a module signal of the display module.

33. The parallel-to-serial conversion module according to claim 31, **characterized in that**, the parallel-to-serial conversion module comprises a first transmission unit, a serial-to-parallel converter unit, a parallel-to-serial converter unit, and a second transmission unit;
wherein the first transmission unit is configured to receive image frame signals and generate the signals-to-be-transmitted according to the image frame signals, or output the second parallel signal;
the parallel-to-serial converter unit is configured to convert the signals-to-be-transmitted generated by the module control device into the first serial signal;
the serial-to-parallel converter unit is configured to convert the second serial signal obtained by the module control device into the second parallel signal; and
the second transmission unit is configured to output the first serial signal or obtain the second parallel signal.

34. The parallel-to-serial conversion module according to any one of claims 31 to 33, **characterized in that**, pins of the parallel-to-serial conversion module comprises: one or a plurality of pairs of LVDS TX pins, a pair of LVDS/TCLK pins, and one or a plurality of pairs of TX pins.

35. The parallel-to-serial conversion module according to claim 34, **characterized in that**, the pins of the parallel-to-serial conversion module further comprises one or a plurality of pairs of LVDS RX pins, a pair of LVDS RCLK pins, and/or one or a plurality of pairs of RX pins.

36. An LED display screen, **characterized in that**, the LED display screen comprises one or a plurality of display unit(s), each of at least some of the plurality of display units comprises a plurality of display modules connected in series, and each display module is provided with a control module;
wherein the control module of the display module is configured to analyze the first serial signal sent by the module control device to obtain an image-drive-signal-to-be-displayed of each display module in the same display unit and drive control signals respectively corresponding to each display module in the same display unit, and control the display module to display the image-drive-signal-to-be-displayed of the display module according to the drive control signal corresponding to the display module.

37. The LED display screen according to claim 36, **characterized in that**, the LED display screen further comprises an accommodating device configured to accommodate the module control device, the accommodating device is integrally connected to or detached from the display unit(s), the accommodating device is provided with at least one module control device, and each module control device is connected to at least one of the display unit(s).

38. An LED display module, **characterized in that**, the LED display module and other display modules are connected in series to form a display unit, the display unit is connected to a module control device, and the LED display module is provided with a control module;
wherein the control module of the display module is configured to analyze a first serial signal sent from the module control device to obtain an image-drive-signal-to-be-displayed of each display module in the same display unit and drive control signals respectively corresponding to each display module in the same display unit, and control the display module to display the image-drive-signal-to-be-displayed of the display module according to the drive control signal corresponding to the display module.

39. A control module, **characterized in that**, the control module is arranged in a display module, the display module and other display modules are connected in series to form a display unit, and the display unit is connected to a module control device;
wherein the control module is configured to analyze a first serial signal sent from the module control device to obtain an image-drive-signal-to-be-displayed of each display module in the same display unit, and control displaying of the image-drive-signal-to-be-displayed according to a drive control signal.

40. The control module according to claim 39, **characterized in that**, the control module is configured to convert a first serial signal input through a serial input interface into an image-drive-signal-to-be-displayed and a drive control signal of each display module which are output through a parallel output interface, and analyze the image-driving- signal-to-be-displayed and the drive control signal of each display module in the same display unit to obtain the image-drive-signal-to-be-displayed of the display module and the drive control signal corresponding to the display module.

41. The control module according to claim 39, **characterized in that**, the control module is configured to analyze the first serial signal to obtain the image-drive-signal-to-be-displayed of the display module and generation parameters, and generate the drive control signal corresponding to the display module according to the generation parameters.

42. The control module according to claim 39, **characterized in that**, the control module is further configured to obtain module information of the display module and convert the module information into a second serial signal, wherein the second serial signal is a signal transmitted to the module control device through the display module.

43. The control module according to claim 40, **characterized in that**, the serial input interface is an interface configured to transmit a Serdes serial communication technology signal.

44. The control module according to claim 40, **characterized in that**, the parallel output interface comprises a plurality of interfaces configured to transmit LVDS communication technology signals, alternatively, the parallel output interface is an interface configured to transmit a TTL communication technology signal.

45. The control module according to claim 39, **characterized in that**, the control module comprises a serial-to-parallel converter unit, a parallel-to-serial converter unit, a forwarding unit, a protocol analysis unit, a display driving signal interception unit, a spread spectrum unit, a command processing unit, and an arbitration unit;
wherein the serial-to-parallel converter unit is configured to convert the first serial signal into an image-drive-signal-to-be-displayed of each display module and drive control signals respectively corresponding to each display module; and
the forwarding unit is configured to process the image-drive-signal-to-be-displayed of each display module and the drive control signal respectively corresponding to each display module, and transmit processed signals to a cascaded display module connected in series with the display module through conversion of the parallel-to-serial converter unit;
the protocol analysis unit is configured to analyze the image-drive-signal and the drive control signals;
the display driving signal interception unit is configured to intercept an image-drive-signal-to-be-displayed of the display module from the image-drive-signal-to-be-displayed of each display module, and intercept a drive control signal corresponding to the display module from the drive control signal respectively corresponding to each display module;
the spread spectrum unit is configured to perform a spread spectrum processing according to the image-drive-signal-to-be-displayed of the display module and the drive control signal corresponding to the display module, and control the display module to display the image-drive-signal-to-be-displayed of the display module according to the drive control signal corresponding to the display module;
the command processing unit is configured to process a command to obtain module information of the display module;
the arbitration unit is configured to process the module information and the signals received from the cascaded display module; and
the parallel-to-serial converter unit is configured to convert the module information into a second serial signal.

46. The control module according to claim 39, **characterized in that**, the control module comprises a serial-to-parallel converter unit, a parallel-to-serial converter unit, a forwarding unit, a protocol analysis unit, an image drive signal interception unit, a drive control signal generation unit, a spread spectrum unit, a command processing unit, and an arbitration unit;
wherein the serial-to-parallel converter unit is configured to convert the first serial signal into an image-drive-signal-to-be-displayed of each display module and generation parameters;
the forwarding unit is configured to process the image-drive-signal-to-be-displayed of each display module and the generation parameters, and transmit the processed signals to a cascaded display module connected in series with the display module through conversion of the parallel-to-serial converter unit;
the protocol analysis unit is configured to analyze the image-drive-signal and the generation parameters; and
the image drive signal interception unit is configured to intercept an image-drive-signal-to-be-displayed of the display module from the image-drive-signal-to-be-displayed of each display module;
the drive control signal generation unit is configured to generate the drive control signal corresponding to the display module according to the generation parameters;
the spread spectrum unit is configured to perform a spread spectrum processing according to the image-drive-signal-to-be-displayed of the display module and the drive control signal corresponding to the display module, and control the display module to display the image-drive-signal-to-be-displayed of the display module according to the drive control signal corresponding to the display module;
the command processing unit is configured to process a command to obtain module information of the display module;
the arbitration unit is configured to process the module information and the signals received from the cascaded display module; and
the parallel-to-serial converter unit is configured to convert the module information into a second serial signal.

47. The control module according to any one of claims 39 to 46, **characterized in that**, pins of the control module comprises one or a plurality of pairs of RX pins, one or a plurality of pairs of TX1 pins, one or a plurality of groups of image drive signal pins, one or a plurality of scanning control signal pins, one or a plurality of drive control signal pins, and an SPI pin.
